(19) **Europäisches Patentamt / European Patent Office / Office européen des brevets**

(11) **EP 4 498 294 A1**

(12) **EUROPEAN PATENT APPLICATION**

(43) Date of publication:
**29.01.2025 Bulletin 2025/05**

(21) Application number: **23315295.8**

(22) Date of filing: **25.07.2023**

(51) International Patent Classification (IPC):
**G06N 10/20** (2022.01)    **G06N 10/40** (2022.01)
**G06N 10/70** (2022.01)

(52) Cooperative Patent Classification (CPC):
**G06N 10/40; G06N 10/20; G06N 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Quandela**
**91300 Massy (FR)**

(72) Inventors:
• **HILAIRE, Paul**
**94220 Charenton le Pont (FR)**

• **DE GLINIASTY, Grégoire**
**91300 Massy (FR)**
• **SALAVRAKOS, Alexia**
**08015 Barcelona (ES)**
• **SOMASCHI, Niccolo**
**75005 Paris (FR)**
• **MANSFIELD, Shane**
**75011 Paris (FR)**

(74) Representative: **Yes My Patent**
**32 Boulevard Richard Lenoir**
**75011 Paris (FR)**

(54) **A MODULAR QUANTUM DATA PROCESSING SYSTEM**

(57) The present invention relates to a modular quantum data processing system 100 comprises at least:
• A first quantum data module QDM1 110;
• A second quantum data module QDM2 120;
• A quantum gate module QG1 130;
• A quantum circuit router QCR1 140;
• A quantum channel module QCM, preferably comprising a plurality of quantum channels 150;
• A classical channel module CCM, preferably comprising a plurality of quantum channels 160;
• A classical processing module CPM 170.

Figure 2

**EP 4 498 294 A1**

**Description**

Technical field

The present invention relates to the technical field of quantum computing. Particularly, the invention relates to the technical field of Fault-tolerant quantum computing.

Background of the invention

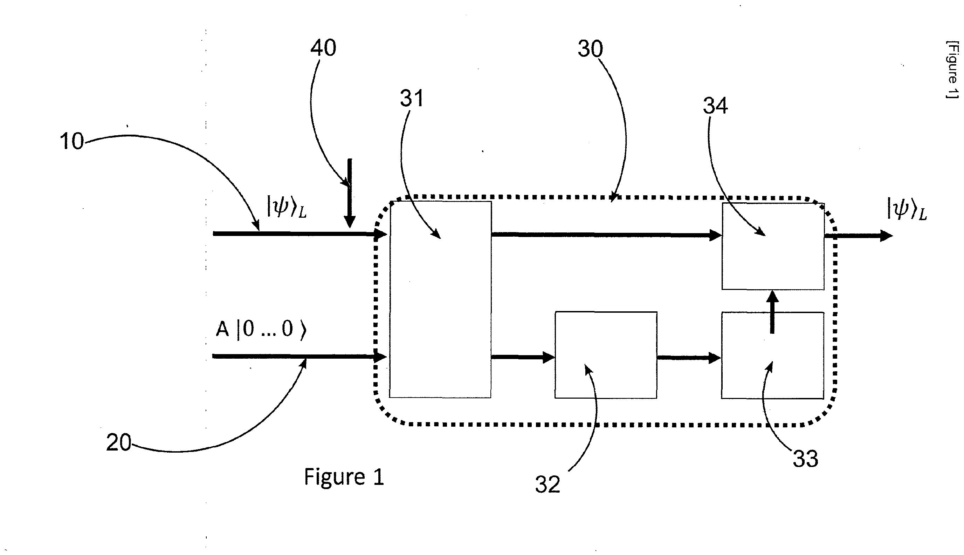

Quantum computing has seen significant advancements in recent years, with the development of various quantum data processing systems and progress towards the development of fault-tolerant quantum computers. These systems rely on quantum error correction (QEC), as illustrated in Figure 1, to detect 33 and correct 34 errors by repeating QEC cycles 30, entangling 31 ancilla qubits 20 with data qubits 10 of QEC codes, and measuring 32 ancilla qubits 20 to identify errors 33. Some errors can come from noise 40 due to the environment of the data qubit 10, for example. However, existing implementations still face challenges in terms of scalability, modularity, and long-distance connectivity. In general, it is hard to make deterministic high-fidelity gates with the best current quantum emitter platforms, and photonic gates are usually probabilistic.

Repeat-until-success (RUS) photonic gates have been proposed as a potential solution for enabling photonic fault-tolerant quantum computing architectures.

As well known by the skilled person in the relevant art (see for example "Repeat-Until-Success Linear Optics Distributed Quantum Computing", Yuan Liang Lim and al., Phys. Rev. Lett. 95, 030505 or "Repeat-until-success quantum computing using stationary and flying qubits", Yuan Liang Lim et al., Phys. Rev. A 73, 012304), these gates can be implemented near-deterministically (for negligible photon loss) and with better probability in the presence of losses. However, RUS gates have not yet been extensively investigated in the context of fault-tolerant quantum computing architectures for syndrome measurement extraction. Existing photonic architectures comprise fault-tolerant measurement-based quantum computing architectures and fusion-based quantum computing architectures. While these approaches have shown promise, these architectures might not be the most efficient when the photonic qubits are generated from a quantum emitter.

Existing architectures have not yet leveraged the capabilities of quantum emitters in combination with RUS gates and other linear-optical components. New architectures are desired to overcome the shortcomings of existing implementations and to further advance the field of quantum computing. The present invention solves at least some of these issues.

Summary of the invention

According to one aspect, the present invention relates to a modular quantum data processing system configured to cooperate with at least one fault-tolerant quantum computer, preferably configured to process data fault-tolerantly, said modular quantum data processing system comprising at least:

a. A first quantum data module QDM1 comprising at least a first quantum emitter QE1 related to at least a first qubit QU1, said first quantum emitter QE1 being configured to emit at least one entangled photon PH1, preferably encoded as a qubit in at least two degrees of freedom, advantageously with at least two modes, comprising at least two photonic modes PH1a, for example (|0>), and PH1b, for example (|1>), said entangled photon PH1 being entangled with said first quantum emitter QE1, preferably said entangled photon PH1 carrying at least one quantum data QI1 related to said first quantum emitter QE1;

b. A second quantum data module QDM2 comprising at least a second quantum emitter QE2 related to at least a second qubit QU2, said second quantum emitter QE2 being configured to emit at least one entangled photon PH2, preferably encoded as a qubit in at least two degrees of freedom, advantageously with at least two modes, comprising at least two photonic modes PH2a and PH2b, said entangled photon PH2 being entangled with said second quantum emitter QE2 preferably said entangled PH2 carrying at least one quantum data QI2 related to said second quantum emitter QE2;

c. A quantum gate module QG1 configured to perform at least one optical transformation on said four photonic modes PH1a, PH1b, PH2a and PH2b; preferably said optical transformation being a linear optical transformation, said quantum gate module QG1 comprising at least one interferometer unit, said interferometer unit being configured to execute said optical transformation; said interferometer unit being configured to make at least said entangled photon PH1 interferes with at least said entangled photons PH2, said interferometer unit comprising at least a first photon detector PD1, a second photon detector PD2, a third photon detector PD3, and a fourth photon detector PD4, preferably each photon detector PD1, PD2, PD3 and PD4 being individually configured to detect one specific photonic mode, said interferometer unit being configured to:

> i. detect at least one detection pattern using said four photon detectors PD1, PD2, PD3, and PD4,
> ii. generate at least one outcome based on said detection pattern, and
> iii. send at least one classical data related to said outcome to at least said classical channel.

said outcome being taken among at least:

> iv. A first outcome corresponding to an entangling gate between the first quantum emitter QE1 and the second quantum emitter QE2;
> v. A second outcome corresponding to a unitary gate between the first quantum emitter QE1 and the second quantum emitter QE2;
> vi. A third outcome corresponding to a detection of less than two photons.

said quantum gate module QG1 being configured to repeat said at least one optical transformation on photonic modes of at least two other entangled photons PH11 and PH22, said entangled photon PH11 being emitted by said first quantum emitter QE1 and said entangled photon PH22 being emitted by said second quantum emitter QE2, until said outcome is equal to said first outcome, preferably until said outcome is equal to said first outcome or to said third outcome;

d. A quantum circuit router QCR1 comprising at least one photon router PR1, said photon router PR1 being preferably configured to route at least one photon from a given input to a given output, advantageously said photon router PR1 being configured to route said entangled photon PH1 from said first quantum data module QDM1 to said quantum gate module QG1, said photon router PR1 being configured to route said entangled photon PH2 from said second quantum data module QDM2 to said quantum gate module QG1;

e. A quantum channel module QCM configured to transfer at least one photon from one module to another module, said quantum channel module QCM comprising at least a first quantum channel and at least a second quantum channel, said first quantum channel being configured to propagate said entangled photon PH1 from said first quantum data module QDM1 to said quantum circuit router QCR1, said second quantum channel being configured to propagate said entangled photon PH2 from said second quantum data module QDM2 to said quantum circuit router QCR1;

f. A classical channel module CCM configured to transfer classical data from one module to another module;

g. A classical processing module CPM comprising at least one classical processing unit CPU configured to treat classical data received from said classical channel module CCM, and configured to send classical data through said classical channel module CCM, said classical data being configured to control at least one module taken among: the first quantum data module QDM1, the second quantum data module QDM2, the quantum gate module QG1, the quantum circuit router QCR1.

The present invention enables fault-tolerant quantum computing on non-interacting quantum emitters. In the prior art, these non-interacting quantum emitters were thought to be used only as ancilla to produce entangled photons or as physical qubits in a measurement-based quantum computing framework.

The present invention allows interaction between distant data qubits and ancilla qubits, with possibility of enabling non-local quantum error correction, i.e. quantum error correction protocols involving non-local qubit interactions.

The present invention enables a scalable universal FTQC architecture for non-interacting quantum emitters. By non-interacting quantum emitters, one means quantum devices that can encode quantum information, e.g. a qubit, but don't interact directly with each other, either because they can't or because one chooses not to use the possible interaction, but which can emit other qubits such as photons, potentially entangled with such emitters and among them.

The present invention allows running any quantum algorithm in a fault-tolerant way on a hardware platform based on non-interacting quantum emitters and photonic links.

Using quantum error correcting codes with long-range connectivity between physical qubits can, among other things, facilitate the implementation of high-rate QEC codes which reduces the resource footprint of an FTQC. Enabling this long-distance connectivity can be realized using quantum emitters and photonic links for example.

According to another aspect, the present invention relates to a fault-tolerant quantum computer comprising at least one modular quantum data processing system according to the present invention.

According to another aspect, the present invention relates to a method for processing at least one quantum data QI1 using at least one modular quantum data processing system according to the present invention, said method comprises at least the following steps performed by said at least one modular quantum data processing system:

> a. A first emission step of at least one entangled photon PH1 by the first quantum data module QDM1, preferably said entangled photon PH1 being encoded as a qubit in at least two degrees of freedom, advantageously with at least two modes, said entangled photon PH1 comprising at least two photonic modes PH1a and PH1b, said entangled photon PH1 being entangled with said first quantum emitter QE1, preferably said entangled photon PH1 carrying at least one quantum data QI1 related to said first quantum emitter QE1;

b. A second emission step of at least one entangled photon PH2 by the second quantum data module QDM2, preferably said entangled photon PH2 being encoded as a qubit in at least two degrees of freedom, advantageously with at least two modes, said entangled photon PH2 comprising at least two photonic modes PH2a and PH2b, said entangled photon PH2 being entangled with said second quantum emitter QE2, preferably said entangled photon PH2 carrying at least one quantum data QI2 related to said second quantum emitter QE2;

c. A first routing step of at least said photon PH1 by the quantum circuit router QCR1, preferably by the photon router PR1, from said first quantum data module QDM1 to the quantum gate module QG1, preferably through the quantum channel module QCM;

d. A second routing step of at least said photon PH2 by the quantum circuit router QCR1, preferably by the photon router PR1, from said second quantum module QM1 to the quantum gate module QG1, preferably through the quantum channel module QCM;

e. An optical transformation step, by at least said quantum gate module QG1, on said four photonic modes PH1a, PH1b, PH2a and PH2b, said optical transformation step comprising the following steps:

i. a detection step of at least one detection pattern using said four photon detectors PD1, PD2, PD3, and PD4,
ii. a generation step of at least one outcome based on said detection pattern, and
iii. a sending step of at least one classical data related to said outcome to at least said classical channel module.

said outcome being taken among at least:

iv. a first outcome corresponding to an entangling gate between the first quantum emitter QE1 and the second quantum emitter QE2;
v. a second outcome corresponding to a unitary gate between the first quantum emitter QE1 and the second quantum emitter QE2;
vi. a third outcome corresponding to a detection of less than two photons.

said optical transformation step being configured to be repeated on photonic modes of at least two other entangled photons PH11 and PH22, said entangled photon PH11 being emitted by said first quantum emitter QE1 and said entangled photon PH22 being emitted by said second quantum emitter QE2, until said outcome is equal to said first outcome, preferably until said outcome is equal to said first outcome or to said third outcome.

According to another aspect, the present invention relates to a computer program product for processing at least one quantum data using at least one modular quantum data processing system according to the present invention which, when executed on at least one processor unit, executes the method according to the present invention.

According to another aspect, the present invention relates to a non-volatile memory comprising at least one computer program product according to the present invention.

According to another aspect, the present invention relates to the use of the method of the present invention to process at least one quantum data QI1 using a fault-tolerant quantum computer comprising at least one modular quantum data processing system according to the present invention.

According to another aspect, the present invention relates to the use of the method of the present invention for quantum error correction.

According to another aspect, the present invention relates to a modular quantum data processing system configured to process at least one quantum data fault-tolerantly by using at least heralded photon-mediated two-qubit gates, preferably during the error detection process, i.e. stabilizer check measurements.

Before providing below a detailed review of embodiments of the invention, some optional characteristics that may be used in association or alternatively will be listed hereinafter:

According to an example, said first outcome corresponds to joint measurements of the photonic modes PH1a, PH 1b, PH2a, and PH2b in at least one of the following detection patterns:

a. At least one photon detected by the first photon detector PD1, and at least one photon detected by the third photon detector PD3;
b. At least one photon detected by the second photon detector PD2, and at least one photon detected by the fourth photon detector PD4;
c. At least one photon detected by the first photon detector PD1, and at least one photon detected by the fourth photon detector PD4;

d. At least one photon detected by the second photon detector PD2, and at least one photon detected by the third photon detector PD3;

said first outcome corresponds to an entangled gate between the first qubit QU1 and the second qubit QU2, preferably said first outcome corresponding to controlled gates configured to apply a controlled rotation by an angle Theta on at least one among the first qubit QU1 and the second qubit QU2, said angle Theta being different from zero, based on the state of other qubits QU1 or QU2.

This allowed enabling two-qubit gates between the qubits through optical links rather than just through immediate interaction, e.g. nearest neighbor interaction. This feature provides the availability of generating long-distance interaction between qubits, advantageously between non-interacting quantum emitters. Moreover, this feature can provide a higher success rate for linear-optical delegated gates, for example.

According to an example, said second outcome corresponds to joint measurements of the photonic modes PH1a, PH1b, PH2a, and PH2b in at least one of the following detection patterns:

a. At least two photons detected by the first photon detector PD1;

b. At least one photon detected by the first photon detector PD1, and at least one photon detected by the second photon detector PD2;

c. At least two photons detected by the second photon detector PD2;

d. At least two photons detected by the third photon detector PD3;

e. At least one photon detected by the third photon detector PD3, and at least one photon detected by the fourth photon detector PD4;

f. At least two photons detected by the fourth photon detector PD4.

said second outcome corresponding to an identity gate between the first qubit QU1 and the second qubit QU2, preferably said second outcome corresponds to controlled identity gates.

According to an example, said first quantum emitter QE1 is configured to emit said another entangled photon PH11 if said outcome is equal to said second outcome, and said second quantum emitter QE2 is configured to emit said another entangled photon PH22 if said outcome is equal to said second outcome.

According to an example, said first quantum emitter QE1 is configured to emit at least a first set of entangled photons comprising said photon PH1 and said photon PH11, the photons of said first set being emitted, preferably sequentially, by said first quantum emitter QE1; and, said second quantum emitter QE2 is configured to emit at least a second set of photons comprising said photon PH2 and said photon PH22, the photons of said second set being emitted, preferably sequentially, by said second quantum emitter QE2; and, one photon of said first set of photons is sent to said quantum gate module QG1 each time said outcome is equal to said second outcome; and, one photon of said second set of photons is sent to said quantum gate module QG1 each time said outcome is equal to said second outcome; and the other photons of said first set of photons are sent to at least a detector module if said outcome is equal to said first outcome, preferably if said outcome is equal to said first outcome or to said third outcome, said detector module being configured to indirectly measure at least one quantum state of said first quantum module QM1, preferably of said first quantum emitter QE1, advantageously of said first qubit QU1

According to an example, the other photons of said first set of photons are sent to at least two another photon detectors PD5 and PD6 if said outcome is equal to said first outcome, preferably if said outcome is equal to said first outcome or to said third outcome, said photon detectors PD5 and PD6 being configured to indirectly measure at least one quantum state of said first quantum module QM1, preferably of said first quantum emitter QE1, advantageously of said first qubit QU1.

This allows an augmentation of the speed of quantum data processing.

According to an example, said first quantum emitter QE1 comprises at least one quantum system QS1 taken among at least: a natural atom and/or an artificial atom, said natural and/or artificial atom being taken among at least: a Rydberg atom, a trapped ion, any solid-state defect in bulk semiconductor, such as a quantum dot, a quantum dot molecule, a defect in diamond, in silicon carbide and/or in silicon, rare-earth ion, said quantum system QS1 comprising at least a spin SP1, acting as a physical carrier of QU1 and advantageously said photon PH1 is entangled with said spin SP1.

According to an example, the first quantum emitter QE1 comprises a cavity and/or a waveguide configured to collect and/or guide the photon PH1, preferably into a desired point, advantageously into a predetermined localization.

This allows to increase the emission of a photon in a given mode and facilitates its collection in a quantum channel module.

According to an example, said second quantum emitter QE2 comprises at least one quantum system QS2 taken among at least: a natural atom and/or an artificial atom, said natural and/or artificial atom being taken among at least: a Rydberg atom, a trapped ion, any solid-state defect in bulk semiconductor, such as a quantum dot, a quantum dot molecule, a defect in diamond, in silicon carbide and/or in silicon, rare-earth ion, said quantum system QS2 comprising at least a spin SP2, acting as a physical carrier of QU1, and advantageously said photon PH2 is entangled with said spin SP2.

According to an example, the second quantum emitter QE2 comprises a cavity and/or a waveguide configured to collect and/or guide the photon PH2, preferably into a desired point, advantageously into a predetermined localization.

This allows to increase the emission of a photon in a given mode and facilitates its collection in a quantum channel module.

According to an example, said first qubit QU1 is a data qubit.

According to an example, said second qubit QU2 is an ancilla qubit.

According to an example, the quantum gate module QG1 is configured to perform at least one entangling gate, which is part of at least one ancilla-assisted stabilizer measurement sequence, the ancilla being used to detect an error on the data qubit.

According to an example, the modular quantum data processing system comprises at least a first quantum control module QC1 and a second quantum control module QC2, said first quantum control module QC1 being configured to control said first quantum data module QDM1 and said second quantum control module QC2 being said second quantum data module QDM2.

According to an example, the first quantum data module QDM1 and the second quantum data module QDM2 are physically separated one from the other by at least a third quantum data module QDM3.

According to an example, the photon router PR1 is configured to route at least one photon according to at least one classical data taken among at least: clock information, information received from the classical processing module CPM.

According to an example, the present invention comprises at least one decoder module, said decoder module comprising at least one decoder unit, said decoder unit being configured to receive said outcome and to output at least one correction data to perform fault-tolerant quantum data processing, preferably said decoding unit being configured to perform fault-tolerant quantum data processing.

According to an example, the method comprises:

a. An emission step by said first quantum emitter QE1 of said another entangled photon PH11 if said outcome is equal to said second outcome,

b. An emission step by said second quantum emitter QE2 of said another entangled photon PH22 if said outcome is equal to said second outcome.

According to an example, said first emission step comprises the emission of at least a first set of photons comprises at least said photon PH1 and said photon PH11, the photons of said first set being sequentially emitted by said first quantum emitter QE1;

According to an example, said second emission step comprises the emission of at least a second set of photons comprising at least said photon PH2 and said photon PH22, the photons of said second set being sequentially emitted by said second quantum emitter QE2;

According to an example, the method comprises at least:

a. a sending step of one photon of said first set of photons to said quantum gate module QG1 each time said outcome is equal to said second outcome,

b. a sending step of one photon of said second set of photons to said quantum gate module QG1 each time said outcome is equal to said second outcome,

c. a sending step of at least one photon of said first set of photons to at least a detector module if said outcome is equal to said first outcome, preferably if said outcome is equal to said first outcome or to said third outcome, said detector module being configured to indirectly measure at least one quantum state of said first quantum data.module QDM1, preferably of said first quantum emitter QE1, advantageously of said first qubit QU1.

According to an example, the method comprises a sending step of at least one photon of said first set of photons to at least two other photon detectors PD5 and PD6 if said outcome is equal to said first outcome, preferably if said outcome is equal to said first outcome or to said third outcome, said photon detectors PD5 and PD6 being configured to indirectly measure at least one quantum state of said first quantum module QM1, preferably of said first quantum emitter QE1, advantageously of said first qubit QU1.

According to an example, the method is optimized for non-interacting quantum emitters for which two-qubit gates are not native. Preferably, implementing linear-optical gates, i.e. quantum gates, can be done either with repeat-until-success linear-optical gates or boosted linear-optical gates.

According to an example, at least the first qubit QU1 and the second qubit QU2 encode at least one logical qubit, said logical qubit having a error probability related to the use of the quantum gate module, said error probability being configured to be lower than a predetermined value V1, preferably said predetermined value V1 being related to the noise of the system and/or to the size of the quantum error correcting code.

According to an example, the quantum module comprises a failure probability related to at least said quantum gate, if said failure probability is below a predetermined value V0, called the fault-tolerant threshold, said fault-tolerant threshold being determined by the quantum error correcting code being used and/or by the noise model of the system, then the logical error probability is lower than said predetermined value V1.

According to an example, at least one of the photon detectors PD1, PD2, PD3, PD4 comprises a threshold detection unit, said threshold detection unit is configured to send at least one classical data indicating the detection of at least one photon when the measure of the photon detector exceeds a predetermined threshold.

According to an example, at least one of the photon detectors PD1, PD2, PD3, and PD4 is a threshold detector and is configured to send at least one classical data indicating the detection of at least one photon.

According to an example, at least one of the photon detectors PD1, PD2, PD3, PD4 comprises a photon number resolving detection unit, said photon number resolving detection unit is configured to send at least one classical data indicating the detection of at least one photon when the measure of the photon detector exceeds a predetermined number.

According to an example, at least one of the photon detectors PD5 and PD6 comprises a photon number resolving detection unit, said photon number resolving detection unit is configured to send at least one classical data indicating the detection of at least one photon when the measure of the photon detector exceeds a predetermined number.

According to an example, said quantum gate module QG1 is configured to perform at least one linear-optical transformation of said four photons PH1a, PH1b, PH2a and PH2b, said quantum gate module QG1 comprising at least one linear interferometer unit, said linear interferometer unit being configured to execute said linear-optical transformation.

According to an example, said linear interferometer unit is configured to make at least one among said photon PH1 interfere with at least one among said photon PH2, said linear interferometer unit comprising at least a first photon detector PD1, a second photon detector PD2, a third photon detector PD3, and a fourth photon detector PD4, said linear interferometer unit being configured to:

    a. detect at least one detection pattern using said four photon detectors PD1, PD2, PD3, and PD4,
    b. deliver at least one outcome based on said detection pattern, and
    c. send at least one classical data related to said outcome to at least said classical channel module.

According to an example, said photon PH1 belongs to a first group of photons carrying the same quantum data QI1 and the quantum gate module QG1 is configured to process said first group of photons.

According to an example, said photon PH2 belongs to a second group of photons carrying the same quantum data QI2 and the quantum gate module QG1 is configured to process said second group of photons.

According to an example, said outcome is taken among at least:

    a. A first outcome corresponding to an entangling gate between the first quantum emitter QE1 and the second quantum emitter QE2;
    b. A second outcome corresponding to a unitary gate between the first quantum emitter QE1 and the second quantum emitter QE2;
    c. A third outcome corresponding to a detection of less than two photons among PH1a, PH1b, PH2a, and PH2b.

According to an example, said interferometer unit comprises at least a first linear optical device OP1, a second linear optical device OP2, a third linear optical device OP3, and a fourth linear optical device OP4, each linear optical device OP1, OP2, OP3 and OP4 comprises two input channels and two output channels. Said interferometer unit is configured as follow:

    a. one input channel of the first linear optical device OP1 is configured to receive said photon PH1a;
    b. one input channel of first linear optical device OP1 is configured to receive said photon PH1b;
    c. one output channel of the first linear optical device OP1 is configured to send at least one photon to one input of the fourth linear optical device OP4;
    d. one output channel of the first linear optical device OP1 is configured to send at least one photon to one input of the third linear optical device OP3;
    e. one input channel of the second linear optical device OP2 is configured to receive said photon PH2a;
    f. one input channel of the second linear optical device OP2 is configured to receive said photon PH2b;
    g. one output channel of the second linear optical device OP2 is configured to send at least one photon to one input of the fourth linear optical device OP4;
    h. one output channel of the second linear optical device OP2 is configured to send at least one photon to one input of the third linear optical device OP3;

i. one input channel of the third linear optical device OP3 is configured to receive at least one photon from the first linear optical device OP1;

j. one input channel of the third linear optical device OP3 is configured to receive at least one photon from the second linear optical device OP2;

k. one output channel of the third linear optical device OP3 is configured to send at least one photon to said first photon detector PD1;

l. one output channel of the third linear optical device OP3 is configured to send at least one photon to said second photon detector PD2;

m. one input channel of the fourth linear optical device OP4 is configured to receive at least one photon from the first linear optical device OP1;

n. one input channel of the fourth linear optical device OP4 is configured to receive at least one photon from the second linear optical device OP2;

o. one output channel of the fourth linear optical device OP4 is configured to send at least one photon to said third photon detector PD3;

p. one output channel of the fourth linear optical device OP4 is configured to send at least one photon to said fourth photon detector PD4;

According to an example, at least one of the linear-optical devices OP1, OP2, OP3, and OP4 comprises at least one beam-splitter, preferably each linear-optical devices OP1, OP2, OP3, and OP4 comprises at least one beam-splitter.

According to an example, said interferometer unit comprises at least one phase controller located between one output of OP2 and one input of OP4.

According to.an example, said linear interferometer unit is configured to execute at least one repeat-until-success scheme.

According to an example, said photon PH1 is emitted in a first predetermined direction, and said photon PH2 is emitted in a second predetermined direction.

According to an example, said photon router PR1 is configured to route at least one photon originating from a single mode to any of N output modes.

According to an example, said photon router PR1 is configured to optically connect said first quantum data module QDM1 to said quantum gate module QG1, preferably through said quantum channel module QCM.

According to an example, said photon router PR1 is configured to optically connect said second quantum data module QDM2 to said quantum gate module QG1, preferably through said quantum channel module QCM.

According to an example, the modular quantum data processing system comprises at least a detector module comprising at least two photon detectors PD5 and PD6 configured to detect at least one photon, said photon detectors PD5 and PD6 being configured to indirectly measure at least one quantum state of said first quantum module QM1, preferably of said first quantum emitter QE1, advantageously of said first qubit QU1.

According to an example, at least one of the photon detectors PD5 and PD6 comprises a threshold detection unit, said threshold detection unit is configured to send at least one classical data indicating the detection of at least one photon when the measure of the photon detector exceeds a predetermined threshold.

According to an example, at least one of the photon detectors PD5 and PD6 is a threshold detector and is configured to send at least one classical data indicating the detection of at least one photon.

Brief description of the drawings

[The numerical references will be added to the description and to the claims in the final draft]

The aims, objects, as well as technical features, and advantages of the invention, will emerge better from the detailed description of an embodiment of the invention which is illustrated by the following figures in which:

- Figure 1 is a schematic view of an error correction cycle used in a fault-tolerant quantum computer.
- Figure 2 is a general schematic view of a modular quantum data processing system according to an embodiment of the present invention.
- Figure 3 is a schematic view of a quantum emitter according to an embodiment of the present invention.
- Figure 4 is a schematic view of a photon router according to an embodiment of the present invention.
- Figure 5 is a schematic view of a quantum gate module according to an embodiment of the present invention.
- Figure 6 is a schematic view of a general quantum circuit for an indirect stabilizer measurement using an ancilla qubit "anc" using RUS CZ gates $m_i$.
- Figure 7 is a schematic view of interconnected modular quantum data processing systems according to an embodiment of the present invention.

- Figure 8 is a flowchart of a method according to an embodiment of the present invention.

The drawings are given by way of example and do not limit the invention. They constitute representations of principles intended to facilitate understanding of the invention and are not necessarily on the scale of practical applications.

## Detailed description

The present disclosure is here described in detail with reference to non-limiting embodiments illustrated in the drawings.

The present invention relates to a modular quantum data processing system configured to cooperate with at least one fault-tolerant quantum computer. Preferably said modular quantum data processing system is configured to process data fault-tolerantly.

As well known by the skilled person in the relevant art (see for example "Fault-tolerant quantum computation with constant error", Aharonov, Dorit and Ben-Or, Michael, Proceedings of the twenty-ninth annual ACM symposium on Theory of computing, 176--188 (1997), a fault-tolerant quantum computer (FTQC) is a quantum computer that has a built-in resistance to physical errors, i.e. a built-in mechanism configured to correct physical errors. Errors are identified by measuring stabilizer operators which depend on the quantum error correcting (QEC) code being used, for example, these stabilizer operators can be implemented by quantum gates, as discussed hereafter.

In an FTQC, quantum gates can be implemented fault-tolerantly using different strategies depending on the quantum error-correcting code being used.

As well known by the skilled person in the relevant art (see for example "Layered Architecture for Quantum Computing", N. Cody Jones et al., Phys. Rev. X 2, 031007, a quantum computing architecture is the association of a theoretical model for quantum computing (such as gate-based, measurement-based, ancilla-driven or adiabatic quantum computing) together with the organization of the hardware components that enables the implementation of this quantum computing model. Therefore, a FTQC architecture is a quantum computing architecture that exploits the fault tolerance properties of QEC. For a FTQC architecture, arbitrarily large quantum computation can be run even when the hardware components have some number of imperfections that induce noise in the computation.

According to an embodiment, the present invention relates to a scalable FTQC architecture. By scalable, one means that the FTQC computing power can be made as large as required by increasing its hardware size to arbitrarily large value. According to an embodiment, a condition for scalability is that the noise level of each hardware components does not preferably depend on the size of the quantum computer, advantageously increase with the size of the quantum computer.

According to an embodiment, the present invention relates to a modular FTQC architecture which is based on an arrangement of hardware modules discussed hereafter. Preferably, there can be different categories or types of modules, but advantageously the number of different types of modules remains identical even when the FTQC becomes larger and larger. All the modules from the same category are preferably identical and can have some imperfections. For a scalable modular FTQC, the imperfections should not increase with the size of the global FTQC. The present invention is an interesting approach towards the scalability of FTQC, as increasing the computing capabilities corresponds to increasing the number of modules, but not their complexity.

As well known by the skilled person in the relevant art (see for example "Quantum error correction for beginners", Simon J Devitt et al 2013 Rep. Prog. Phys. 76 076001), an FTQC relies on quantum error correction QEC to detect and correct errors by repeating QEC cycles where ancilla qubits are entangled with data qubits of the QEC code and measure the ancilla qubit state to identify errors. As described hereafter, the present invention is a scalable and modular architecture for FTQC. Preferably, the present invention is based on the indirect interaction between non-interacting qubits, denoted as quantum emitters QE or spins, mediated by the emission of new qubits, e.g. photons and advantageously using repeat-until-success (RUS) photonic two-qubit gates, i.e. quantum gates. While linear-optical two-photon gates are intrinsically probabilistic, RUS gates can be implemented near-deterministically without photon loss, and with a better probability in the presence of losses. The present invention proposes to use advantageously these RUS gates directly for the entangling step of the QEC cycles and treat a gate failure as an error correctable by a quantum computer similarly to any other errors.

As described hereafter, a quantum emitter with a given degree of freedom can emit photons that are entangled with this degree of freedom, such as a spin for example. Each photon is routed, using a photon router, to be interfered with, using a linear interferometer, another photon and then detected, using photon detectors, using a threshold or photon number resolving method. The interferometer is chosen such that the correct detection pattern corresponds to an entangling gate between the quantum emitters of the two photons, and that allows the use of a repeat-until-success scheme. The entangling gate is repeated until success or until a photon is lost denoting a failure or until the trial is aborted for other reasons. Advantageously, the entangled photon emission can be used to measure the quantum emitter's state.

At a higher level, the quantum emitters QE correspond to the data qubits and the ancilla qubits of a QEC code.

According to an embodiment, the present invention is configured to collaborate with a usual quantum circuit approach to quantum computing to make an indirect syndrome measurement using an ancilla qubit. However, in the present invention, now at least one entangling gate of a usual quantum circuit is advantageously replaced by a repeat-until-success gate and/or a boosted gate. According to the present invention, a gate failure is accounted for by a decoder as a heralded error in the usual way. According to an embodiment of the present invention, a neural-network-based decoder can be used for such a task, or even other kinds of decoders could be suitable as well. As described hereafter, the present invention is compatible with usual FTQC stacks.

The present invention, as described hereafter, relates to an architecture compatible with natural atom and artificial atom quantum emitters. It is also compatible with linear-optical components and single-photon detectors. Therefore, it is an architecture that can enable FTQC for such components.

The present invention relates to an architecture configured to be used to run any quantum algorithms. Advantageously, the present invention is based on a modular approach with "flying" qubits, i.e. photons. The present invention could potentially enable distributed quantum computing and network applications such as distributed and delegated blind quantum computing.

According to an embodiment, and as described hereafter, ancilla and data qubits correspond to quantum emitters. Preferably, each emitter emits photons into optical fibers, using advantageously at least one photon router, towards at least one predetermined quantum gate, i.e. measurement RUS cell, where a RUS measurement is performed. Advantageously, the measurement outcome at each step is sent back through classical feedforward to decide whether the gate should be repeated or not. Preferably, these RUS gates and/or boosted gates are used to perform ancilla-assisted stabilizer (syndrome) measurements. Preferably, the ancilla and the data qubits can be measured, potentially by measuring emitted photons.

In other words, the quantum emitters send photons to a router that directs them to the correct RUS gate and/or single-photon measurement cell. Each RUS cell receives preferably at least two photons and performs an entangling measurement using linear optics and detectors, as described hereafter.

A modular quantum data processing system:

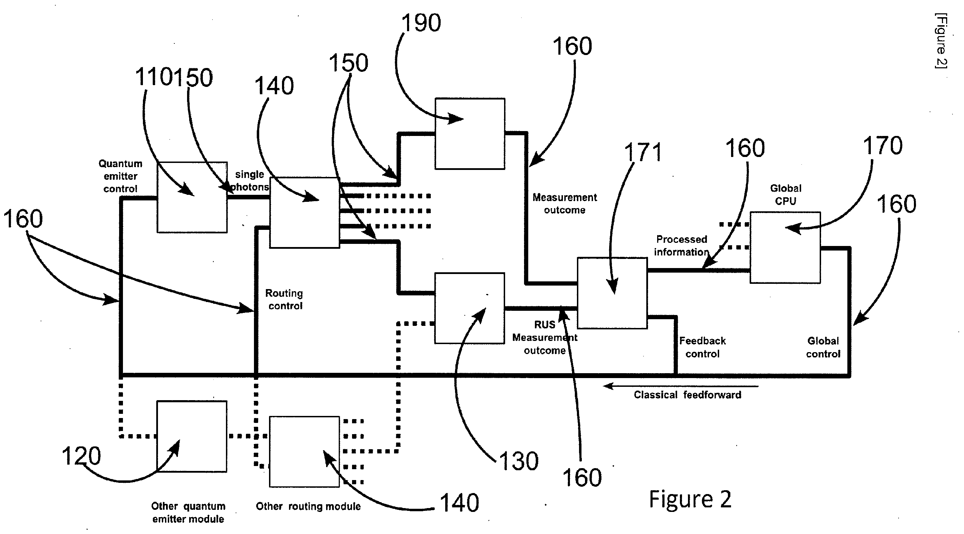

According to an embodiment, the present invention relates to a modular architecture based on a plurality of modules. According to an embodiment, all the logical qubits are encoded, preferably using a QEC code, into multiple physical qubits. Advantageously, each physical qubit corresponds to the spin qubit of a quantum emitter. According to an embodiment, the modules are arranged to enable QEC code stabilizer measurements and the realization of fault-tolerant gates. As illustrated by Figure 2, this modular quantum data processing system 100 comprises different modules organized and connected together to enable a large-scale FTQC. The modules used for such an architecture are described in more details in the following description.

According to one embodiment, said modular quantum data processing system 100 comprises at least:

  a. A first quantum data module QDM1 110;
  b. A second quantum data module QDM2 120;
  c. A quantum gate module QG1 130;
  d. A quantum circuit router QCR1 140;
  e. A quantum channel module QCM, preferably comprising a plurality of quantum channels 150;
  f. A classical channel module CCM, preferably comprising a plurality of quantum channels 160;
  g. A classical processing module CPM 170.

According to an embodiment, the first quantum data module QDM1 110 is configured to generate at least one entangled photon PH1 which is routed by the quantum circuit router QCR1 140 to the quantum gate module QG1 130; and the second quantum data module QDM2 120 is configured to generate at least one entangled photon PH2 which is routed by the quantum circuit router QCR1 140 to the quantum gate module QG1 130. Then, the quantum gate module QG1 130 is configured to make the photon PH1 interfere with the photon PH2 and to measure the outcome of said interference, preferably to realize a RUS measurement. Then, based on the said outcome, a classical data is sent to the classical processing module CPM 170. Then, according to predetermined rules, another classical data is sent to other modules to control them.

According to an embodiment, said first quantum data module QDM1 110 comprises at least a first quantum emitter QE1 111. The first quantum emitter QE1 111 is preferably related to at least a first qubit QU1 114. Advantageously, the first quantum emitter QE1 111 is configured to emit at least one entangled photon PH1. The entangled photon PH1 is preferably encoded as a qubit with at least two degrees of freedom, advantageously with at least two modes, comprising at least two photonic modes PH1a, for example ($|0>$), and PH1b, for example ($|1>$). The entangled photon PH1 is advantageously entangled with the first quantum emitter QE1 111. Preferably, the entangled photon PH1, also called photon PH1, carries at least one quantum data QI1 related to the first quantum emitter QE1 111. Therefore, the determination of a property of the photon PH1 determines a property of the first quantum emitter QE1 111.

According to an embodiment, said second quantum data module QDM2 120 comprises at least a second quantum emitter QE2 121. The second quantum emitter QE2 121 is related to at least a second qubit QU2 114. Advantageously, the second quantum emitter QE2 121 is configured to emit at least one entangled photon PH2. The entangled photon PH2 is preferably. encoded as a qubit in at least two degrees of freedom, advantageously with at least two modes, comprising at least two photonic modes PH2a and PH2b. The entangled photon PH2 is advantageously entangled with the second quantum emitter QE2 121. Preferably, the entangled PH2 carries at least one quantum data QI2 related to the second quantum emitter QE2 121. Here, the determination of a property of the photon PH2 determines a property of the second quantum emitter QE2 121.

According to an embodiment, a global FTQC architecture requiring a given number of logical qubits for the full computation and given links between these qubits can be implemented using at least partly the present invention. For example, using a QEC code with a given number of stabilizer check qubits and data qubits would require at least this number of quantum emitters and each stabilizer check qubit is linked to its associated data qubits through optical links and RUS modules.

Quantum emitter:

According to an embodiment, the first quantum emitter QE1 111 comprises at least one quantum system QS1. The quantum system QS1 can be taken among at least: a natural atom and/or an artificial atom, said natural and/or artificial atom being taken among at least: a Rydberg atom, a trapped ion, any solid-state defect in bulk semiconductor, such as a quantum dot, a quantum dot molecule, a defect in diamond, in silicon carbide and/or in silicon, rare-earth ion. Preferably the quantum system QS1 comprises at least the first qubit QU1 114.

Advantageously, the quantum system QS1 comprises at least a spin SP1, acting as a physical carrier of the first qubit QU1 114. Preferably, the photon PH1 is entangled with the spin SP1.

According to an embodiment, the second quantum emitter QE2 121 comprises at least one quantum system QS2. The quantum system QS2 can be taken among at least: a natural atom and/or an artificial atom, said natural and/or artificial atom being taken among at least: a Rydberg atom, a trapped ion, any solid-state defect in bulk semiconductor, such as a quantum dot, a quantum dot molecule, a defect in diamond, in silicon carbide and/or in silicon, rare-earth ion. Preferably the quantum system QS2 comprises at least the second qubit QU2 114.

Advantageously, the quantum system QS2 comprises at least a spin SP2, acting as a physical carrier of QU2 114. Preferably, the photon PH2 is entangled with said spin SP2.

As well known by the skilled person in the relevant art (see for example "Solid-state single-photon emitters", Aharonovich, I. et al., Solid-state single-photon emitters. Nature Photon 10, 631-641 (2016)), a quantum emitter is an atom or an artificial atom capable of emitting single photons. According to the present invention, quantum emitters QE have a degree of freedom, such as a spin on which a qubit can be encoded, $|0\rangle_{QE} = |\uparrow\rangle_{QE}$, $|1\rangle_{QE} = |\downarrow\rangle_{QE}$. In this description, one will use the word spin or degree of freedom in the same way for some simplification reasons. It has to be noted that a degree of freedom can be a spin or any two energy level states of the quantum emitter. According to an embodiment, only one degree of freedom of a single photon, such as its polarization or its path, can be used to encode a qubit and can be entangled with the spin state upon emission, preferably creating a photonic qubit such as the photons PH1 and PH2., with an emission process well known by the skilled person in the relevant ar (see for example "Proposal for Pulsed On-Demand Sources of Photonic Cluster State Strings", Netanel H. Lindner et al., Phys. Rev. Lett. 103, 113602). This emission process can be described by the operator:

$$E_{QE,ph} = |0\rangle_{QE} \otimes |0\rangle_{ph} \langle 0|_{QE} + |1\rangle_{QE} \otimes |1\rangle_{ph} \langle 1|_{QE}.$$

This operator allows the emission of spin-entangled photons. For example, if the spin is initialized in the $|+\rangle_{QE} = |0\rangle_{QE} + |1\rangle_{QE}$, for simplicity of notations, the normalization of the states has been omitted. After the emission of a photon, the resulting state is:

$$E_{QE,ph} |+\rangle_{QE} = |0\rangle_{QE} \otimes |0\rangle_{ph} + |1\rangle_{QE} \otimes |1\rangle_{ph}.$$

A photonic qubit is a qubit encoded onto one of the degrees of freedom of a single photon. As previously indicated, one can for example encode it into its polarization and/or into its path.

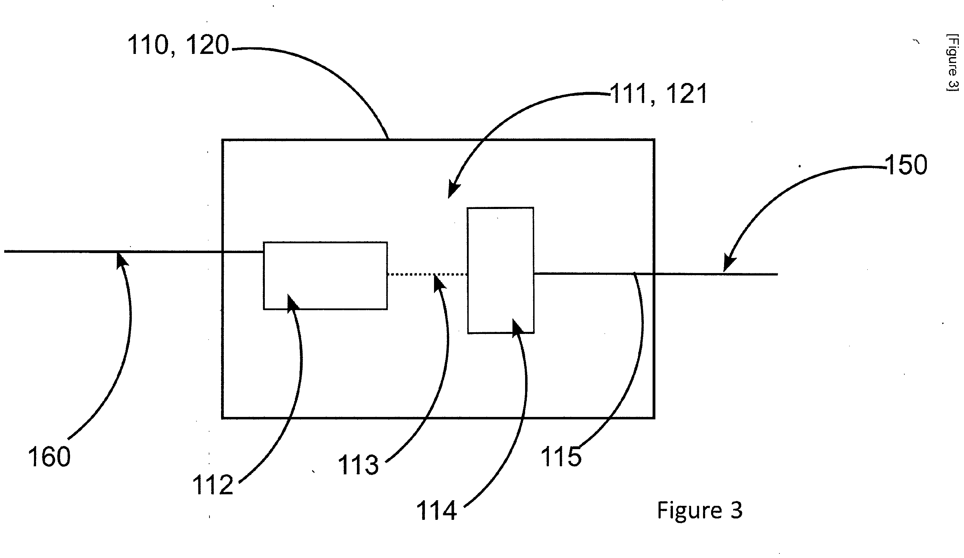

According to an embodiment illustrated by Figure 3, a quantum data module 110, 120 can comprise a quantum emitter 111, 121. Said quantum emitter 111, 121 can comprise a laser 112 to generate photons 113. Said photons 113 are configured to be entangled with a qubit 114. Preferably, the laser can be controlled using classical data received through at least one classical channel 160. Advantageously, the entangled photons 115 are collected and sent to another module, preferably to the quantum circuit router QCR1 140 through at least one quantum channel 150. Said entangled photons 115 can also be called photonic qubits.

According to an embodiment, such a quantum emitter can be a singly-charged quantum dot which corresponds to a four-energy level system. In the present invention, the photonic qubits are preferably encoded using the polarization degree of freedom. However, this emission process is by no means restricted only to such a restricted level structure and can be adapted to many other configurations and most quantum emitter platforms, such as atoms, superconducting circuits, quantum dots, and color defects, for example.

According to an embodiment, a quantum data module QDM 110, 120 includes a quantum emitter QE 111, 121 with a spin qubit 114, and preferably all its control components for photon emission and spin control, i.e. degree of freedom control. Preferably, a quantum emitter QE 111, 121 is configured to send photons advantageously in a single direction, so that photonic qubits 115 can be efficiently collected, for example using an optical fiber. The control components of a quantum emitter QE 111, 121 are preferably manipulated by at least one classical data. For example, the emission of a new spin-entangled photon, i.e. a photon such as PH1 and PH2, can be triggered by a classical data related for example to a measurement, and/or, as discussed hereafter, to the result of a RUS gate trial.

According to an embodiment, a quantum emitter QE 111, 121 can be considered as a quantum memory, thanks to its degree of freedom, i.e. its spin, that can be interfaced with photons.

According to an embodiment, the photon PH1 and/or PH2 can be collected more efficiently by using a cavity or a waveguide, or any mode engineering methods to increase the emission of a photon in a given mode, so that it can be easily collected in the quantum channel module, i.e. in a quantum channel 150.

According to an embodiment, the first qubit QU1 114 is a data qubit and the second qubit QU2 114 is an ancilla qubit. Preferably, the quantum gate module QG1 130 is configured to perform at least one entangling gate, which is part of at least one ancilla-assisted stabilizer measurement sequence, the ancilla qubit being used to detect an error on the data qubit. This kind of measurement of the state of a data qubit using an ancilla qubit is well known by the skilled person in the relevant art (see for example "Quantum Error Correction for Beginners", Simon J. Devitt et al., arXiv:0905.2794).

Quantum gate module:

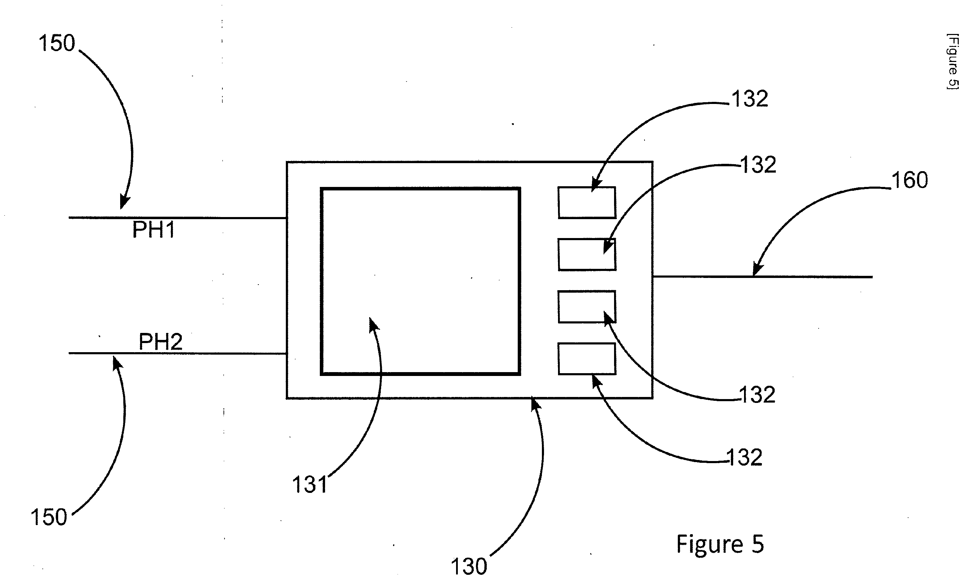

According to an embodiment, and as illustrated by Figure 5, the quantum gate module QG1 130 is configured to perform at least one optical transformation on said four photonic modes PH1a, PH1b, PH2a and PH2b. Preferably said optical transformation is a linear optical transformation.

According to an embodiment, said quantum gate module QG1 130 comprises at least one interferometer unit 131. Preferably, said interferometer unit 131 is configured to execute said optical transformation. Advantageously, said interferometer unit 131 is configured to make at least the entangled photon PH1, also called the photon PH1, interfere with at least said entangled photon PH2, also called the photon PH2. The photon PH1 and the photon PH2 are routed to the quantum gate module QG1 130 through quantum channels 150.

Said interferometer unit comprises preferably at least a first photon detector PD1 132, a second photon detector PD2 132, a third photon detector PD3 132, and a fourth photon detector PD4 132. Advantageously, each photon detector PD1, PD2, PD3 and PD4 132 being individually configured to detect one specific photonic mode.

According to an embodiment, the interferometer unit 131 is configured to:

  i. detect at least one detection pattern, preferably using said four photon detectors PD1, PD2, PD3, and PD4 132,
  ii. generate at least one outcome based on said detection pattern, and
  iii. send at least one classical data related to said outcome to at least said classical channel module 160.

Advantageously, said outcome is taken among at least:

  i. A first outcome corresponding to an entangling gate between the first quantum emitter QE1 111 and the second quantum emitter QE2 112;
  ii. A second outcome corresponding to a unitary gate between the first quantum emitter QE1 111 and the second quantum emitter QE2 112;
  iii. A third outcome corresponding to a detection of less than two photons.

According to an embodiment, said first outcome corresponds to joint measurements of the photonic modes PH1a, PH1b, PH2a, and PH2b in at least one of the following detection patterns:

  a. At least one photon detected by the first photon detector PD1, and at least one photon detected by the third photon detector PD3;

b. At least one photon detected by the second photon detector PD2, and at least one photon detected by the fourth photon detector PD4;

c. At least one photon detected by the first photon detector PD1, and at least one photon detected by the fourth photon detector PD4;

d. At least one photon detected by the second photon detector PD2, and at least one photon detected by the third photon detector PD3;

Preferably, said first outcome corresponds to an entangled gate between the first qubit QU1 and the second qubit QU2. According to an embodiment, said first outcome can correspond to controlled gates configured to apply a controlled rotation by an angle Theta on at least one among the first qubit QU1 and the second qubit QU2, said angle Theta being different from zero, based on the state of other qubit QU2 or QU1.

The present invention allows enabling two-qubit gates between the qubits QU1 and QU2, for example, through optical links rather than through immediate interaction i.e. nearest neighbor interaction. This provides the availability of generating long distance interaction and possibility to implement non-local error correction protocols. The present invention has the advantage of having the theoretical higher success rate known for linear-optical delegated gates.

According to an embodiment, said second outcome corresponds to joint measurements of the photonic modes PH1a, PH1b, PH2a, and PH2b in at least one of the following detection patterns:

a. At least two photons detected by the first photon detector PD1;

b. At least one photon detected by the first photon detector PD1, and at least one photon detected by the second photon detector PD2;

c. At least two photons detected by the second photon detector PD2;

d. At least two photons detected by the third photon detector PD3;

e. At least one photon detected by the third photon detector PD3, and at least one photon detected by the fourth photon detector PD4;

f. At least two photons detected by the fourth photon detector PD4.

Preferably, said second outcome corresponds to an identity gate between the first qubit QU1 and the second qubit QU2. According to an embodiment, said second outcome can correspond to controlled identity gates.

Repeat-Until-Success Gate:

According to a preferred embodiment, said quantum gate module QG1 130 is configured to repeat said at least one optical transformation on photonic modes of at least two other entangled photons PH11 and PH22 until said outcome is equal to said first outcome, preferably until said outcome is equal to said first outcome or to said third outcome. Preferably, said other entangled photon PH11 is emitted by said first quantum emitter QE1 111 and said other entangled photon PH22 is emitted by said second quantum emitter QE2 121.

According to an embodiment, said first quantum emitter QE1 111 is configured to emit said another entangled photon PH11 if said outcome is equal to said second outcome.

According to an embodiment, said second quantum emitter QE2 121 is configured to emit said another entangled photon PH22 if said outcome is equal to said second outcome.

Said quantum gate module QG1 130, also called RUS gate module, is configured to take as input two photonic qubits, i.e. two photons, advantageously PH1 and PH2, and perform a linear-optical transformation followed by photon detection, preferably by the photon detectors PD1, PD2, PD3 and. PD4 134. Depending on the measurement outcome, the quantum gate module QG1 130 is configured to send at least one classical data, i.e. a message, related to said outcome into classical channels 160. Advantageously, classical data can be duplicated and sent it to multiple modules, using multiple classical channels 160, for example.

As well known by the skilled person in the relevant art, a repeat-until-success (RUS) gate is a method to perform a quantum gate U which relies on the repetition of a non-deterministic quantum circuit C which involves measurements. Said quantum circuit C is repeated until one of the measurement outcomes corresponding to the successful implementation of the quantum gate U is obtained, this corresponds to the first outcome according to an embodiment of the present invention. The other measurement outcomes should correspond, up to corrections, to the identity gate so that it can be repeated indefinitely, this corresponds to the second outcome according to an embodiment of the present invention.

According to an embodiment, the RUS gate can be a two-qubit gate, e.g. a CZ gate as known by the skilled person in the relevant art, and the non-deterministic quantum circuit C corresponds to the quantum data modules QM1 110 and QM2 120, to the quantum circuit router QCR1 140 and to the quantum channel module QCM,, i.e. forming at least partially a linear-optical circuit. Preferably, this RUS gate, i.e. said quantum gate module QG1 130, can be used to perform a CZ two-qubit gate between the qubit degree of freedom, here referred to as a spin qubit, of two quantum emitters, capable of emitting spin-entangled photons, i.e. entangled photons.

According to an embodiment, the linear-optical interferometer 131 is configured to implement at . least one RUS gate. For example, said linear-optical interferometer 131 can comprise 4 inputs. Preferably, the input modes 0 and 1, respectively 2 and 3 correspond to the dual-rail modes of the photonic qubits emitted by the first quantum emitter QE1 111, respectively the second quantum emitter QE2 121.

According to an embodiment, four photon-number-resolving detectors PD1, PD2, PD3 and PD4 134 are positioned at the output modes of the interferometer unit 131. It is also possible to imitate the use of photon-number-resolving detectors using threshold detectors in parallel.

As previously indicated, the first outcome, the second outcome, and the third outcome correspond to the different measurement outcomes corresponding to one trial of the RUS scheme. Preferably, a successful measurement outcome corresponds to said first outcome.

According to an embodiment, said first outcome can correspond to a successful CZ gate up to a rotation onto the spin emitters. According to an embodiment, corrections that can be applied on the first qubit QU1, according to corrections methods well known by the skilled person in the relevant art For example, such a correction can be $Z_a(-\pi/2)Z_b(+\pi/2)$ or $Z_a(+\pi/2)Z_b(-\pi/2)$, here, $Z_i(\theta)$ is a Z rotation by an angle $\theta$ on qubit i.

According to an embodiment, said second outcome can correspond to a partial failure measurement outcome. Said second outcome correspond to the detection of exactly two photons with different measurement outcomes than the successful measurement outcomes. In this situation, the quantum gate has not succeeded, and the system is configured to repeat said measurement until success.

According to an embodiment, the third outcome corresponds to a complete failure.

Advantageously, the gate success probability is maximized by repeating it until it succeeds or completely fails. Said RUS gate is therefore very efficient to perform a gate between remote qubits using linear optics. Between each trial step of the gate a round of communication between the quantum emitter and quantum gate module, i.e. the detector nodes, are performed. Indeed, preferably, a pair of photons is transferred from a quantum emitter towards the detectors, and the classical data of the measurement outcome is transferred back to the quantum emitter's modules to decide whether the next trial should proceed or not.

According to an embodiment, if the distance between a quantum emitter and a quantum gate module, i.e. a RUS gate, is called $L_0$, then the waiting time T between two trials is equal to $2L_0/c$, with c the speed of light. Therefore, with k being the maximum number of trials for a RUS gate, a time of $2kL_0/c$ can be allocated to each RUS gates. Advantageously, some strategies, such as allocating dynamically the number of trials to a quantum gate module, i.e. to a RUS gate and/or boosted gate, can improve the gate success probability..

For a given qubit, the circuit of an error correction cycle can correspond to performing multiple RUS gates sequentially. For example, each RUS gate has a given number of trials k and, in principle, each trials take a certain amount of time t (mainly due to the feedforward of classical information to decide whether or not to perform another trial). Preferably, the failure of a RUS gate induces some heralded errors on the qubits. The more errors, the less likely it is to correct all of them. some strategies can be designed to overcome these issues.

According to an embodiment, a first strategy can be to adapt the number of trials k of a RUS gate dynamically. A fault-tolerant scheme requires to perform multiple RUS gates, for example sequentially and/or in an error correction cycle, multiple qubits can be involved in many RUS gates. Since these gates succeed probabilistically, a predetermined number, i.e. a maximum number, of trials k can be allocated to each RUS gate, otherwise each gate could take in theory infinite time which is not realistic. Therefore, according to said embodiment, each RUS gate is configured to realize a determined number of trials k, preferably said number being dynamically determined. Advantageously, this number of trials k can be dynamically allocated, based on the previous RUS gates. For example, if a RUS gate takes n < k number of trials to be successful or completely fail, one can start more quickly doing the next RUS gates and allocate the remaining k-n trials of the previous RUS gate to these following RUS gates, such that one can now allocate a maximum number of trials k' = 2k - n, because there is k, the initial trial number, and k - n, the remaining trials not used by the previous RUS gate.

According to another embodiment, a second strategy can be to perform RUS gates in parallel. Assuming that performing all the m RUS gates involving the same qubit sequentially and that the total amount of time dedicated to an error correction cycle is $t_{tot} = m.k.t$ (m RUS gates which each takes k trials of time t). One of the main limitations could be the time taken by the feedforward of classical data. Since said feedforward is needed to be able to decide whether another trial needs to be performed, it is a limitation on the time of the RUS gate and it can affect the total error correction cycle time $t_{tot}$ only because one performs the m gates sequentially. This total time $t_{tot}$ can be reduced by performing some RUS gate in parallel in the sense that the trials of two or more RUS gates which have one qubit qb1 in common are intertwined. For example, said qubit qb1 emits a photon for the first trial of a RUS gate, then sends a second photon for the first trial of another RUS gate before receiving the feedback of the first trial. This can be done as long as the first feedback is not received and for as many trials as needed (or allocated). This way, the total time of an error correction cycle could in principle be $t'_{tot} = k.t$.

According to another embodiment, a third strategy can be to adaptively choose whether to perform a RUS gate or not. Said strategy is designed to decide whether or not to perform RUS gate depending on the outcome of previous RUS gates and/or on other events in the computation. Since a RUS gate can potentially add errors to the system, if the risk of adding errors is greater than the benefits of performing it, one can decide not to perform it. For example, suppose that a RUS gate used for a stabilizer measurement has already failed, it is impossible to recover the ancilla-based stabilizer measurement reliably since for that one needs all the RUS gate to succeed and, therefore, it might be relevant not to perform the other RUS gates involved in this measurement in that case, as one cannot gain more pieces of information but one could add more errors in the system if another RUS gate could fail too.

According to an embodiment, these three strategies are only some examples. These strategies can be used in combination together. For example, the first strategy can be used with the second strategy and/or the third strategy.

Boosted Gate:

According to an embodiment, RUS gates can be replaced with boosted gates. These boosted gates are well known by the skilled person in the relevant art (see for example "Near-deterministic hybrid generation of arbitrary photonic graph states using a single quantum emitter and linear optics", Near-deterministic hybrid generation of arbitrary photonic graph states using a single quantum emitter and linear optics, Paul Hilaire et al., Quantum 7, 992 (2023)). Preferably, a boosted gate is configured to perform with smaller success rate, but remove the need of communications between the quantum gate module QG1 130 and the quantum data modules QM1 110 and QM2 120 between each trial. According to said embodiment, the strategy is that each quantum emitter produces sequentially k entangled photons and sends them towards the quantum gate module QG1 130.

According to an embodiment, trials are performed consecutively until one trial succeeds, or one completely fails, or all the k entangled photons have been used. Preferably, whenever, successful, all the remaining entangled photons are measured in another module, resulting into a two-qubit entangling gate, up to single-qubit rotations on the quantum emitters which depends on all the measurement outcomes of all the emitted photons.

Preferably, the number k of trials is predetermined, and therefore and the gate fails if any of the 2k emitted photons are lost. The advantage of this strategy is that no classical feedforward is needed from the quantum gate module, i.e. detectors, towards the quantum data modules, i.e. the quantum emitters. Preferably, only one classical feedforward is needed at the end of the $k^{th}$ trial to send the classical data, for example, instructions, to perform the desired gate, preferably by single-qubit rotation correction. Therefore, the waiting time induced by communication is reduced to $2L_0/c$ and is independent of k. It has to be noted that a boosted gate can be therefore faster than a RUS gate. In some embodiments, the boosted gates have a lower success rate compared to RUS gates.

According to said embodiment, the first quantum emitter QE1 111 is configured to emit at least a first set of entangled photons comprising said photon PH1 and said photon PH11. Preferably, the photons of said first set are emitted, advantageously sequentially, by the first quantum emitter QE1 111.

According to said embodiment, the second quantum emitter QE2 121 is configured to emit at least a second set of photons comprising said photon PH2 and said photon PH22. Preferably, the photons of said second set being emitted, advantageously sequentially, by said second quantum emitter QE2 121.

Preferably, one photon of said first set of photons is sent to said quantum gate module QG1 130 each time said outcome is equal to said second outcome, and one photon of said second set of photons is sent to said quantum gate module QG1 130 each time said outcome is equal to said second outcome.

Preferably, the other photons of said first set of photons are sent to at least a detector module if said outcome is equal to said first outcome, preferably if said outcome is equal to said first outcome or to said third outcome, said detector module being configured to indirectly measure at least one quantum state of said first quantum module QM1, preferably of said first quantum emitter QE1, advantageously of said first qubit QU1.

According to an embodiment, the detector module comprises at least two photon detectors PD5 and PD6.

Advantageously, the other photons of said first set of photons are sent to at least one detector module 180, comprising at least two photon detectors PD5 and PD6, if said outcome is equal to said first outcome, preferably if said outcome is equal to said first outcome or to said third outcome. Said photon detectors PD5 and PD6 are configured to indirectly measure at least one quantum state related to the first quantum module QDM1 110, preferably at least one quantum state of the first quantum emitter QE1 111, advantageously of the first qubit QU1 114.

The use of a boosted gate can be interesting for non-local codes when the distance between each qubit becomes nonnegligible, or to increase the stabilizer measurement rate so that fewer operation error occurs.

Quantum circuit router:

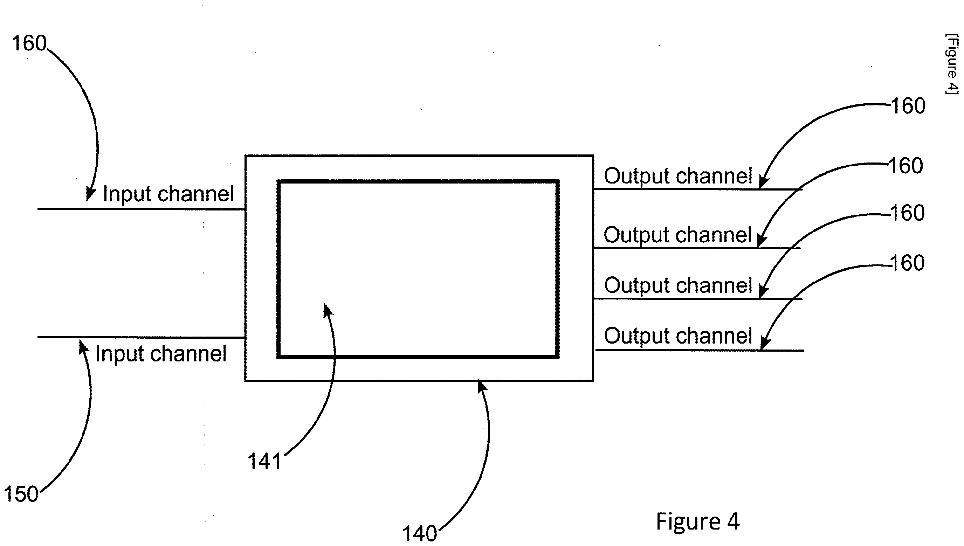

According to an embodiment, and as illustrated by Figure 4, the quantum circuit router QCR1 140 comprises at least one photon router PR1 141. The photon router PR1 141 is advantageously configured to route at least one photon from a given input to a given output. Preferably, the photon router PR1 141 is configured to route the entangled photon PH1 from said first quantum data module QDM1 110 to the quantum gate module QG1 130. Preferably, the photon router PR1 141 is configured to route the entangled photon PH2 from said second quantum data module QDM2 120 to the quantum gate module QG1 130.

According to an embodiment, the quantum circuit router QCR1 140 is an active component that routes photons from a given input to a given output. For example, photons originated from a single mode, i.e. input channel 160, can be routed to any of N output modes, i.e. output channel 160, of the photon router PR1 141. Advantageously, the routing strategy of these photons can be either static, for example depending on a clock, or can be dynamic, i.e. adaptive, for example depending on data sent to the photon router PR1 141 by a classical channel 150.

Quantum channel module:

According to an embodiment, the quantum channel module QCM comprises at least one quantum channel 160, preferably a plurality of quantum channels 160. The quantum channel module QCM is advantageously configured to transfer at least one photon from one module to another module.

According to an embodiment, said quantum channel module QCM comprises at least a first quantum channel 150 and at least a second quantum channel 150, said first quantum channel 150 is configured to propagate said entangled photon PH1 from said first quantum data module QDM1 110 to said quantum circuit router QCR1 140, said second quantum channel 150 is configured to propagate said entangled photon PH2 from said second quantum data module QDM2 120 to said quantum circuit router QCR1 140.

Preferably, said quantum channel module QCM comprises at least a first fiber F1 and at least a second fiber F2. For example, the first fiber F1 can be configured to propagate the entangled photon PH1 from the first quantum data module QDM1 110 to the quantum circuit router QCR1 140, and the second fiber F2 can be configured to propagate the entangled photon PH2 from the second quantum data module QDM2 120 to the quantum circuit router QCR1 140.

According to an embodiment, the quantum channel 160 comprises at least one optical fiber.

Preferably, the propagating photons, i.e. the photons, are transferred from one module to another thanks to quantum channels 160, i.e. quantum channel module, that can be implemented thanks to optical fibers, for example. According to an embodiment, the length L of a quantum channel is related to the time it takes to transfer a photon from one module to another and it generally also relates to the photon loss probability. indeed, an optical fiber would have for example a linear loss of typically 0.2dB per kilometer at telecom frequencies. Thus, an optical fiber of length L would induce a photon loss error equal to $e^{-L/Latt}$ with Latt the optical fiber attenuation distance (Latt $\approx$ 22 km for telecom frequencies).

Classical channel module:

According to an embodiment, the classical channel module CCM comprises at least one classical channel 150, preferably a plurality of classical channels 150. The classical channel module CCM is configured to transfer classical data from one module to another module, preferably through classical channels. Preferably, classical channels are used to transfer classical data from one module to another one module. Said classical channel module can be used to send classical data. to other modules, these classical data can be configured to control a module.

According to an embodiment, the classical channel 150 comprises at least one electrical wire.

Classical processing module:

According to an embodiment, the classical processing module CPM 170 comprises at least one classical processing unit CPU 171. Preferably, the classical processing unit CPU 171 is configured to treat classical data, i.e. information. The classical data can be received from the classical channel module CCM, i.e. through classical channels 150. Advantageously, the classical processing unit CPU 171 is configured to send classical data preferably through said classical channel module CCM. Preferably, the classical data is configured to control at least one module taken among: the first quantum data module QDM1 110, the second quantum data module QDM2 120, the quantum gate module QG1 130, the quantum circuit router QCR1 140.

Preferably, the classical processing unit CPU 171 treats the classical data received through classical channels 160 and send classical data through classical channels 160. For example, at least some of these classical data can be used to decide whether or not another trial should be realized, or for decoding purposes as discussed hereafter.

Detector module

According to an embodiment, If the spin qubits cannot be directly measured in a quantum data module, the present invention can comprise a detector module 180, i.e. a photon measurement module. Said detector module 180 is preferably configured to measure the spin qubits, advantageously indirectly.

Decoder Module

According to an embodiment, the modular quantum data processing system 100 comprises at least one decoder module. The decoder module comprises preferably at least one decoder unit. Advantageously, the decoder unit is configured to receive classical data, preferably stabilizer check measurements outcomes. The decoder unit is configured to output at least one error pattern. Said error pattern is configured to be related to the error which is the most likely to have occurred. The decoder unit can be configured to receive the outcomes of at least one quantum gate module e.g. QG1 130. It can also be configured to output a set of correction to correct this error pattern.

According to an embodiment, the decoder module is configured receive at least one outcome of at least the quantum gate module QG1 130 and can use an algorithm that exploits this at least one outcome to obtain better efficiency, preferably and is configured to use an algorithm that exploits this at least one outcome to obtain better efficiency.

As well known by the skilled person in the relevant art, an error correcting code employs stabilizer checks to determine whether errors have occurred, i.e. employs outcomes from a quantum gate module to determine whether errors have occurred. These checks provide a way to detect the syndrome of an error, which represents the number of checks that were not satisfied. Multiple errors (or a set of different errors) can produce the same syndrome. In such cases, a decoder is used to identify the most likely error and correct it.

Typically, decoders rely solely on the check measurements to make this determination. However, according to an embodiment of the present invention, the invention goes a step further by utilizing additional information: the outcome of each heralded gate, i.e. of each quantum gate module. By considering this extra information, the present invention allows to more accurately assess the probability of each error and correct them more efficiently.

In essence, when errors occur, they generate an error syndrome based on the stabilizer check measurements. This syndrome serves as the primary information for the decoder, allowing it to ideally evaluate the most probable errors that led to this syndrome, essentially performing the inverse operation. By incorporating the outcomes of the heralded gates, i.e. the repeat-until-success or boosted gates, the present invention allows to gain access to more comprehensive information. This enables to evaluate the occurrence probability of errors with greater efficiency, resulting in more efficient decoders overall.

According to an embodiment, an efficient and fast decoder is an essential part of a successful FTQC. To use its performances to its fullest, a decoder should be optimized for the error that the qubits are experiencing and benefit from all the information about these errors. For example, an erasure channel is typically much easier to decode than operation errors as such an error is heralded. If a qubit is lost, one hasn't gained any information about this qubit measurement. While in principle, one could replace a qubit loss by some random measurement outcome and treat this as a qubit error, this strategy is not as efficient as exploiting the heralding properties of a qubit loss and using a decoder that exploits new type of error.

According to an embodiment, the new type of error corresponds to a heralded gate failure, i.e. to the second outcome. This means that said decoder can exploit this heralding to maximize its performances. Each RUS gate or boosted gate can either succeed, be aborted or fail, as previously described. If it succeeds, the correct CZ gate is performed, if it partially fails, the identity gate is performed and if it fails a completely dephasing channel to each quantum emitter is applied. These outcomes are advantageously exploited in said decoder.

Based on the previous description and on these modules, the data and ancilla qubits of a QEC codes are preferably encoded using the spin qubits of quantum emitters. Therefore, for each data or ancilla qubit, advantageously, a single quantum emitter module can be used. Each quantum data module is connected through a photon router module thanks to a quantum channel. The number of outputs N of the photon router module is preferably predetermined based on the properties of the QEC code. If n stabilizers acts non-trivially on a given data qubit, this data qubit has at least a module of $N \geq n$ outputs, for example. Advantageously, if immediate spin measurement cannot be done, one extra output linked to a photon measurement module for indirect spin measurement (thus $N \geq n + 1$) can be needed.

According to an embodiment, an ancilla qubit used for the measurement of a stabilizer of weight n' is configured to cooperate with a router module with N output, $N \geq n$'. For a stabilizer K measured indirectly using ancilla QU2 and acting non-trivially onto data qubit QU1, a RUS gate module 130 could be connected to one of the output ports of the photon router PR1 141 of both QU2 and QU1. The quantum gate module is advantageously also linked through a classical channel to one or multiple CPU which treats the measurement outcome to decide whether to make a new trial of the quantum gate, i.e. RUS gate, sending this data back to the first quantum emitter module and to the second quantum emitter module, and preferably for the decoding algorithm.

Method for processing at least one quantum data:

The present invention relates also to a method 200 for processing at least one quantum data QI1 using at least one modular quantum data processing system as previously described.

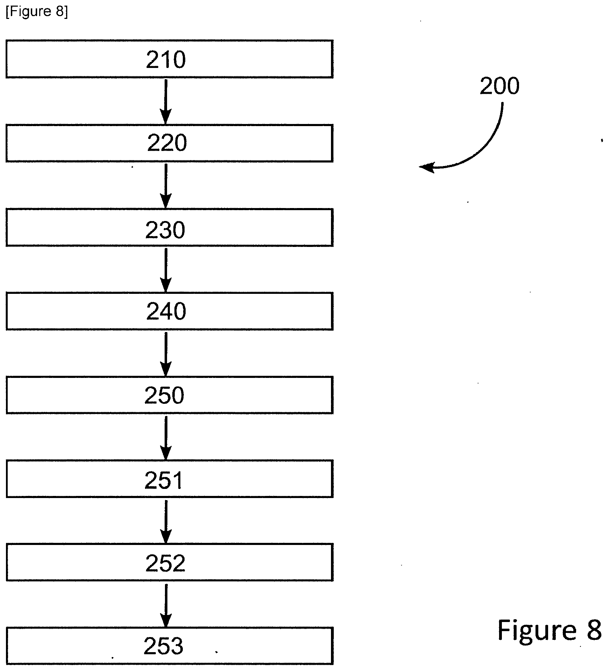

According to an embodiment and as illustrated by Figure 8, said method 200 comprises at least the following steps performed by at least one modular quantum data processing system 100:

a. A first emission step 210 of at least one entangled photon PH1 by the first quantum data module QDM1 110. Preferably, and as previously described, the entangled photon PH1 is encoded as a qubit with at least two degrees of freedom, advantageously with at least two modes. The entangled photon PH1 comprises at least two photonic modes PH1a and PH1b, and is entangled with the first quantum emitter QE1 111, preferably the entangled photon PH1 carries at least one quantum data QI1 related to the first quantum emitter QE1 111;

b. A second emission step 220 of at least one entangled photon PH2 by the second quantum data module QDM2 120. Preferably, and as previously described, the entangled photon PH2 is encoded as a qubit with at least two degrees of freedom, advantageously with at least two modes, the entangled photon PH2 comprises at least two photonic modes PH2a and PH2b, and is entangled with the second quantum emitter QE2 121, preferably said entangled photon PH2 carries at least one quantum data QI2 related to the second quantum emitter QE2 121;

c. A first routing step 230 of at least said photon PH1 by the quantum circuit router QCR1 140, preferably by the photon router PR1 141, from the first quantum data module QDM1 110 to the quantum gate module QG1 130, preferably through the quantum channel module QCM;

d. A second routing step 240 of at least said photon PH2 by the quantum circuit router QCR1 140, preferably by the photon router PR1 141, from the second quantum module QM2 120 to the quantum gate module QG1 130, preferably through the quantum channel module QCM;

e. An optical transformation step 250, by at least the quantum gate module QG1 130, on the four photonic modes PH1a, PH1b, PH2a and PH2b.

Preferably, said optical transformation step comprises the following steps:

i. a detection step 251 of at least one detection pattern using at least the four photon detectors PD1, PD2, PD3, and PD4,

ii. a generation step 252 of at least one outcome based on said detection pattern, and

iii. a sending step 253 of at least one classical data related to said outcome to at least said classical channel module, preferably to said classical processing module CPM 170.

Said outcome being taken among at least:

iv. a first outcome corresponding to an entangling gate between the first quantum emitter QE1 111 and the second quantum emitter QE2 121;

v. a second outcome corresponding to a unitary gate between the first quantum emitter QE1 111 and the second quantum emitter QE2 121;

vi. a third outcome corresponding to a detection of less than two photons.

Said optical transformation step being configured to be repeated on photonic modes of at least two other entangled photons PH11 and PH22 respectively emitted by the first quantum emitter QE1 111 and by the second quantum emitter QE2 121 until said outcome is equal to said first outcome, preferably until said outcome is equal to said first outcome or to said third outcome.

According to an embodiment, the method can also comprise:

a. An emission step by said first quantum emitter QE1 111 of said another entangled photon PH11 if said outcome is equal to said second outcome, and

b. An emission step by said second quantum emitter QE2 121 of said another entangled photon PH22 if said outcome is equal to said second outcome.

According to said embodiment, the method is configured to use at least one RUS gate 130 as previously described.

According to another embodiment, the first emission step 210 comprises the emission of at least a first set of photons comprising at least said photon PH1 and said photon PH11, the photons of said first set being sequentially emitted by said first quantum emitter QE1.

According to said another embodiment, the second emission step 220 comprises the emission of at least a second set of photons comprising at least said photon PH2 and said photon PH22, the photons of said second set being sequentially emitted by said second quantum emitter QE2.

According to said embodiment, the method 200 comprises at least:

a. a sending step of one photon of said first set of photons to said quantum gate module QG1 130 each time said outcome is equal to said second outcome,

b. a sending step of one photon of said second set of photons to said quantum gate module QG1 130 each time said outcome is equal to said second outcome,

c. a sending step of at least one photon of said first set of photons to at least two another photon detectors PD5 and PD6 if said outcome is equal to said first outcome, preferably if said outcome is equal to said first outcome or to said third outcome, said photon detectors PD5 and PD6 being configured to indirectly measure at least one quantum state of said first quantum module QM1 110, preferably of said first quantum emitter QE1 111, advantageously of said first qubit QU1.

According to said another embodiment, the method 200 is configured to use at least one boosted gate as previously described.

Stabilizer measurements with RUS Gate:

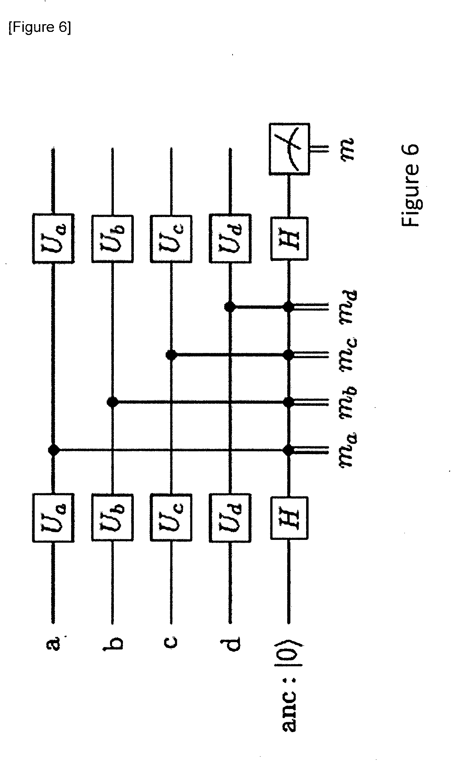

As well known by the skilled person in the relevant art, and as illustrated by Figure 6, stabilizers are usually multi-qubit operators which are hard to measure directly and one generally implements these stabilizer measurements indirectly by using an ancilla qubit. For example, a quantum circuit associated to the measurement of a stabilizer using an ancilla qubit "anc" is represented on Figure 6. In this figure, m is the measurement outcome of the ancilla qubit and it can be equal to 0 or 1. The measurement outcome m is used by the decoder to identify and correct errors. Using the present invention, RUS CZ gates $m_i$ are used, these gates being preferably probabilistic. Advantageously, a RUS gate or boosted gate is probabilistic and is advantageously also a heralded gate. Therefore, one can know when it has been successful, failed, or aborted and one can use this knowledge for the decoder module. A failed or aborted gate can be thus treated as a heralded error which are usually easier to decode. Advantageously, the present invention allows to exploit not only the measurement outcome m, but also the heralded outcome of each RUS CZ gate $m_i$ for I corresponding to the target data qubit involved in a RUS CZ gate with the ancilla qubit "anc".

According to an embodiment, in the ancilla qubit measurements with RUS gate presented in Figure 6, a RUS CZ gate is performed between each data qubit a, b, c and d and the ancilla qubit anc, irrelevant of the heralding outcome of each RUS gate. Advantageously, it is possible to improve the performance of the architecture by deciding whether or not performing a RUS gate, depending on the previous heralding outcome, and preferably the previous measurement outcomes of other stabilizers. For instance, if one of the heralding outcomes of a RUS gate is either a gate failure due to loss or an abortion, it is known that this circuit will not measure the stabilizer it is supposed to as this only occur if all the RUS gate succeeds. Assuming that one of these gates fails or is aborted, one can envision not performing the other RUS gate to avoid bringing new errors induced by other failures. Therefore, one can adapt the strategy for ancilla-assisted stabilizer measurement with the condition of performing the next RUS gates, and/or boosted gates, only if the previous RUS gates have succeeded. Similar strategies can be envisioned with the objective of increasing the loss and fault-tolerance of the present invention.

Spin-optical quantum computing architecture

According to an embodiment, the present invention relates to a spin-optical quantum computing architecture. The present invention is advantageously a modular approach optimized for quantum emitter platforms. Each quantum emitter QE is assumed to embed a qubit degree of freedom, its spin, and is capable of emitting spin-entangled photonic qubits. Preferably, the present invention does not require direct interaction between quantum emitters QE which makes this approach also suitable even for isolated quantum emitters. Indeed, the present invention uses advantageously photons to mediate the two-qubit gates between the spins of non-interacting quantum emitters QE, preferably using a linear-optical RUS scheme. Given a QEC code, the present invention allows to replace the deterministic two-qubit gates in the quantum circuit of indirect ancilla-assisted stabilizer measurements, by linear-optical quantum gates, such as RUS gates and/or boosted gates.

While these gates are in principle near-deterministic, in practice they can fail with a nonvanishing probability due to photon loss. Yet, these gate failures can be treated as a heralded error and use QEC to handle them fault-tolerantly. Advantageously, the present invention is based on these concepts. The modules of the present invention include preferably quantum emitters, and their control components, optical fibers, optical components such as linear-optical components, photon detectors, and classical processing units CPU. Advantageously, for architectures using local low-density parity check codes, such as the surface code, the invention is fully scalable.

According to an embodiment, the present invention relates to a computer program product. Said computer program product is configured to process at least one quantum data using at least one modular quantum data processing system 100 and implemented the method 200. Preferably, when executed on at least one processor unit, said computer program product executes the method 200, i.e. control the modular quantum data processing system in order to implement said method 200. Said computer program product can be stored in a non-volatile memory.

According to an embodiment, the present invention relates to the use of the method 200 to process quantum data using a fault-tolerant quantum computer, said FTQC cooperating with at least one modular quantum data processing system 100. Advantageously, the method 200 can be used for quantum error correction, preferably cooperating with at least one FTQC.

Plurality modular quantum data processing systems:

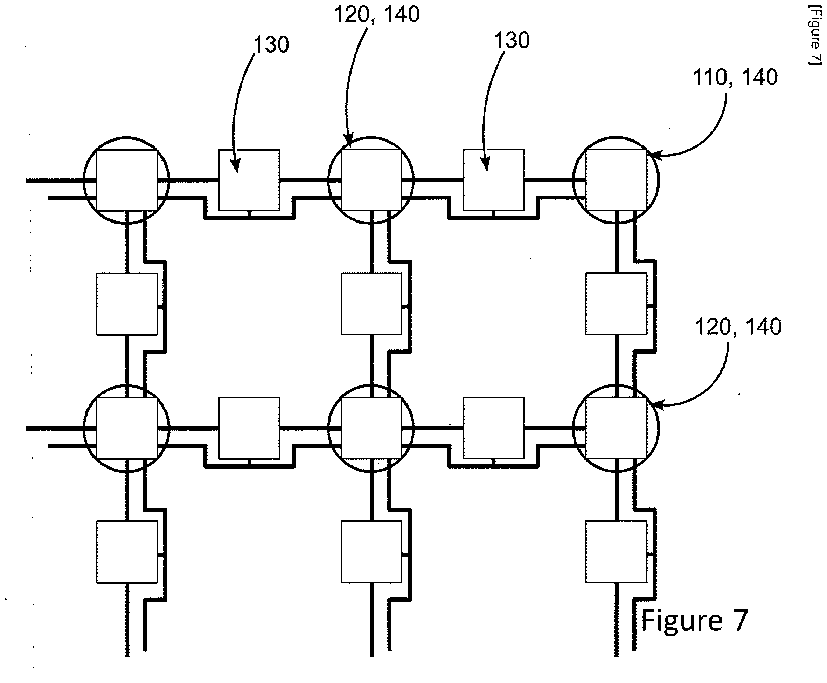

According to an embodiment, and as illustrated by Figure 7, the modularity of the present invention allows to scale up the architecture depending on the computing power needed. In Figure 7, a plurality of quantum data modules 110, 120 are interconnected through quantum gate modules 130. The present invention allows to add as many as needed modular quantum data processing systems. Through the present invention, the scalability of a fault-tolerant quantum computer is possible.

The present invention allows to generate interactions between quantum data modules, i.e. quantum emitters, that are not contiguous. For example, the first quantum data module QDM1 110 can interact with the second quantum data module QDM2 120 even if they are physically separated one from the other by, for example, one or several other quantum data modules. Advantageously, the present invention allows non-local quantum error correction, i.e. quantum error correction protocols involving non-local qubit interactions.

In the present description, the words "data", "piece of information" and "information" can be used for the same purpose, i.e. one data can be or comprise information or a piece of information, and a piece of information can be or comprise a data.

In the present description, one module can comprise several modules, one module can be formed of several modules. For example, the quantum channel module can comprise several other modules and quantum channels.

According to an embodiment, the present invention can be configured to cooperate with at least one input module including one or more user interface devices such as a keyboard, pointer, number pad, or touch screen.

In the present description, a processor may be any logic processing unit, such as one or more digital processors, microprocessors, central processing units, graphics processing units, application-specific integrated circuits, programmable gate arrays, programmed logic units, digital signal processors, network processors, and the like.

In the present description, a storage device is at least one non-transitory or tangible storage device. A storage device can, for example, include one or more volatile storage devices, for instance random access memory, and one or more non-volatile storage devices, for instance read only memory, flash memory, magnetic hard disk, optical disk, solid state disk, and the like.

In the present description, a storage device can include or store processor-executable instructions and/or processor-readable data associated with the operation of the present invention and/or with the execution of the method of the present invention. Execution of processor-executable instructions and/or data causes the at least one processor, and/or control modules or units, to carry out various processes and actions.

Classical data can include processor executable instructions that, when executed by a processor cause the processor to control, initialize, write to, manipulate, read out, and/or otherwise send data to/from a quantum module.

In the present description, and as well-known by the skilled person, a quantum error correcting code can encode at least one logical qubit into at least one physical qubit, preferably into multiple physical qubits. Advantageously, several physical qubits can be used to encode at least one logical qubit. According to an embodiment, the failure of a quantum gate can correspond to an error that can be handled by the quantum error correcting properties of a fault-tolerant quantum computer. Logical qubit error can be reduced to arbitrarily low value provided that the quantum gate failure probability is below a threshold value, called the fault-tolerant threshold for this type of error. In particular, quantum gate failures are preferably heralded errors which have higher thresholds than non-heralded errors.

Classical data can include data used or obtained by the operation of the present invention. Classical data can include data associated with, e.g., created by, referred to, changed by, a processor executing processor-executable instructions, such as, control instructions.

A quantum data module can include one or more qubits. A qubit or quantum bit is a logical building block of a quantum computer comparable to a binary digit in a classical digital computer. A qubit conventionally is a defined physical system having two or more discrete states called computational states or basis states. Basis states logically are analogous to binary states. These states may be labeled $|0>$ and $|1>$.

As well known by the skilled person in the relevant art (see for example "Quantum entanglement", Ryszard Horodecki et al., Rev. Mod. Phys. 81, 865), an entangled state corresponds to at least two systems, for example two particles, sharing one wave function, and where the determination of a property of one of the particles determines a property of the other particle.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc. In some instances, well-known structures associated with semiconductor and/or optical devices and/or quantum computing and/or quantum information processing, such as targets, substrates, lenses, waveguides, shields, filters, lasers, processor-executable instructions, have not been shown or described in detail to avoid unnecessarily obscuring descriptions of the disclosed implementations.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", can include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

All scientific publications referred to in this description, are incorporated by reference in their entireties for all purposes herein.

While certain features of the described embodiments and implementations have been described herein, many modifications, substitutions, changes and equivalents will now occur to the skilled person in the relevant art. It is, therefore, to be understood that the appended claims are intended to cover all such modifications and changes as fall within the scope of the described embodiments and implementations.

**References:**

| | |
|---|---|
| 10 | a data qubit |
| 20 | an ancilla qubit |
| 30 | an error correction cycle |
| 31 | an entanglement step |
| 32 | an ancilla measurement |
| 33 | a decoding step |
| 34 | a correcting step |
| 40 | noise |
| 100 | a modular quantum data processing system |
| 110 | a first quantum data module QDM1 |
| 111 | a first quantum emitter QE1 |
| 112 | a laser |
| 113 | a photon |
| 114 | a qubit (QU1, QU2) |
| 115 | an entangled photon |
| 120 | a second quantum data module QDM2 |
| 121 | a second quantum emitter QE2 |
| 122 | a second qubit QU2 |
| 130 | a quantum gate module QG1 |
| 131 | an interferometer unit |
| 132 | a photon detector PD1, PD2, PD3, PD4, PD5, PD6 |
| 140 | a quantum circuit router QCR1 |
| 141 | a photon router PR1 |
| 150 | a quantum channel |
| 160 | a classical channel |
| 170 | a classical processing module CPM |
| 171 | a classical processing unit CPU |
| 180 | a detector module |

## EP 4 498 294 A1

200    a method for processing at least one quantum data
210    a first emission step
220    a second emission step
230    a first routing step
240    a second routing step
250    an optical transformation step
251    a detection step
252    a generation step
253    a sending step

## Claims

1.  A modular quantum data processing system (100) configured to cooperate with at least one fault-tolerant quantum computer, preferably configured to process information fault-tolerantly, said modular quantum data processing system (100) comprising at least:

    o A first quantum data module QDM1 (110) comprising at least a first quantum emitter QE1 (111) related to at least a first qubit QU1, said first quantum emitter QE1 (111) being configured to emit at least one entangled photon PH1 comprising at least two photonic modes PH1a and PH1b, said entangled photon PH1 being entangled with said first quantum emitter QE1 (111);
    o A second quantum data module QDM2 (120) comprising at least a second quantum emitter QE2 (121) related to at least a second qubit QU2, said second quantum emitter QE2 (121) being configured to emit at least one entangled photon PH2 comprising at least two photonic modes PH2a and PH2b, said entangled photon PH2 being entangled with said second quantum emitter QE2 (121);
    o A quantum gate module QG1 (130) configured to perform at least one optical transformation on said four photonic modes PH1a, PH1b, PH2a and PH2b, said quantum gate module QG1 (130) comprising at least one interferometer unit (131), said interferometer unit (131) being configured to execute said optical transformation, said interferometer unit (131) being configured to make at least said entangled photon PH1 interferes with at least said entangled photons PH2, said interferometer unit (131) comprising at least a first photon detector PD1, a second photon detector PD2, a third photon detector PD3, and a fourth photon detector PD4, preferably each photon detector PD1, PD2, PD3 and PD4 being individually configured to detect one specific photonic mode, said interferometer unit (131) being configured to:

        • detect at least one detection pattern using said four photon detectors PD1, PD2, PD3, and PD4,
        • generate at least one outcome based on said detection pattern, and
        • send at least one classical data related to said outcome to at least one classical channel.

    said outcome being taken among at least:

        • A first outcome corresponding to an entangling gate between the first quantum emitter QE1 (111) and the second quantum emitter QE2 (121);
        • A second outcome-corresponding to a unitary gate -between the-first quantum-emitter QE1 (111) and the second quantum emitter QE2 (121);
        • A third outcome corresponding to a detection of less than two photons.

    said quantum gate module QG1 (130) being configured to repeat said at least one optical transformation on photonic modes of at least two other entangled photons PH11 and PH22, said entangled photon PH11 being emitted by said first quantum emitter QE1 (111) and said entangled photon PH22 being emitted by said second quantum emitter QE2 (121), until said outcome is equal to said first outcome, preferably until said outcome is equal to said first outcome or to said third outcome;
    o A quantum circuit router QCR1 (140) comprising at least one photon router PR1 (141), said photon router PR1 (141) being configured to route said entangled photon PH1 from said first quantum data module QDM1 (110) to said quantum gate module QG1 (130), said photon router PR1 (141) being configured to route said entangled photon PH2 from said second quantum data module QDM2 (120) to said quantum gate module QG1 (130);
    o A quantum channel module QCM configured to transfer at least one photon from one module to another module, said quantum channel module QCM comprising at least a first quantum channel (150) and at least a second quantum channel (150), said first quantum channel (150) being configured to propagate said entangled photon PH1 from said first quantum data module QDM1 (110) to said quantum circuit router QCR1 (140), said second quantum channel (150) being configured to propagate said entangled photon PH2 from said second quantum data module QDM2 (120) to said quantum circuit router QCR1 (140);

o A classical channel module CCM configured to transfer classical data from one module to another module;

o A classical processing module CPM (170) comprising at least one classical processing unit CPU (171) configured to treat classical data received from said classical channel module CCM, and configured to send classical data through said classical channel module CCM, said classical data being configured to control at least one module taken among: the first quantum data module QDM1 (110), the second quantum data module QDM2 (120), the quantum gate module QG1 (130), the quantum circuit router QCR1 (140).

2. The modular quantum data processing system (100) according to the previous claim wherein said first outcome corresponds to joint measurements of the photonic modes PH1a, PH1b, PH2a, and PH2b in at least one of the following detection patterns:

o At least one photon detected by the first photon detector PD1, and at least one photon detected by the third photon detector PD3;
o At least one photon detected by the second photon detector PD2, and at least one photon detected by the fourth photon detector PD4;
o At least one photon detected by the first photon detector PD1, and at least one photon detected by the fourth photon detector PD4;
o At least one photon detected by the second photon detector PD2, and at least one photon detected by the third photon detector PD3;

said first outcome corresponds to an entangled gate between the first qubit QU1 and the second qubit QU2.

3. The modular quantum data processing system (100) according to any one of the previous claims wherein said second outcome corresponds to joint measurements of the photonic modes PH1a, PH1b, PH2a, and PH2b in at least one of the following detection patterns:

o At least two photons detected by the first photon detector PD1;
o At least one photon detected by the first photon detector PD1, and at least one photon detected by the second photon detector PD2;
o At least two photons detected by the second photon detector PD2;
o At least two photons detected by the third photon detector PD3;
o At least one photon detected by the third photon detector PD3, and at least one photon detected by the fourth photon detector PD4;
o At least two photons detected by the fourth photon detector PD4.

said second outcome corresponding to an identity gate between the first qubit QU1 and the second qubit QU2.

4. The modular quantum data processing system (100) according to any one of the previous claims wherein said first quantum emitter QE1 (111) is configured to emit said another entangled photon PH11 if said outcome is equal to said second outcome, and wherein said second quantum emitter QE2 (121) is configured to emit said another entangled photon PH22 if said outcome is equal to said second outcome.

5. The modular quantum data processing system (100) according to any one of the previous claims wherein said first quantum emitter QE1 (111) is configured to emit at least a first set of entangled photons comprising said photon PH1 and said photon PH11, wherein said second quantum emitter QE2 (121) is configured to emit at least a second set of photons comprising said photon PH2 and said photon PH22, and wherein one photon of said first set of photons is sent to said quantum gate module QG1 (130) each time said outcome is equal to said second outcome, and wherein one photon of said second set of photons is sent to said quantum gate module QG1 (130) each time said outcome is equal to said second outcome, and wherein the other photons of said first set of photons are sent to at least a detector module (180) if said outcome is equal to said first outcome, preferably if said outcome is equal to said first outcome or to said third outcome, said detector module (180) being configured to indirectly measure at least one quantum state of said first quantum module QM1, preferably of said first quantum emitter QE1 (111), advantageously of said first qubit QU1.

6. The modular quantum data processing system (100) according to any one of the previous claims wherein said first quantum emitter QE1 (111) comprises at least one quantum system QS1 taken among at least: a natural atom and/or an artificial atom, said natural and/or artificial atom being taken among at least: a Rydberg atom, a trapped ion, any solid-state defect in bulk semiconductor, such as a quantum dot, a quantum dot molecule, a defect in diamond, in silicon carbide and/or in silicon, rare-earth ion, said quantum system QS1 comprising at least a spin SP1, acting as a physical carrier of QU1, and wherein said photon PH1 is entangled with said spin SP1, and wherein said second quantum emitter QE2 (121) comprises at least one quantum system QS2 taken among at least: a natural atom and/or an artificial atom, said natural and/or artificial atom being taken among at least: a Rydberg atom, a trapped ion, any solid-state defect in bulk semiconductor, such as a quantum dot, a quantum dot molecule, a defect in diamond, in silicon carbide and/or in silicon, rare-earth ion, said quantum system QS2 comprising at least a spin SP2, acting as a physical carrier of QU1, and wherein said photon PH2 is entangled with said spin SP2.

7. The modular quantum data processing system (100) according to any one of the previous claims wherein said first qubit QU1 is a data qubit, and wherein said second qubit QU2 is an ancilla qubit, and wherein the quantum gate module QG1 (130) is configured to perform at least one entangling gate, which is part of at least one ancilla-assisted stabilizer measurement sequence, the ancilla being used to detect an error on the data qubit.

8. The modular quantum data processing system (100) according to any one of the previous claims comprising at least a first quantum control module QC1 and a second quantum control module QC2, said first quantum control module QC1 being configured to control said first quantum data module QDM1 (110) and said second quantum control module QC2 being said second quantum data module QDM2 (120).

9. The modular quantum data processing system (100) according to any one of the previous claims wherein the first quantum data module QDM1 (110) and the second quantum data module QDM2 (120) are physically separated one from the other by at least a third quantum data module QDM3.

10. The modular quantum data processing system (100) according to any one of the previous claims wherein the photon router PR1 (141) is configured to route at least one photon according to at least one classical data taken among at least: clock information, information received from the classical processing module CPM (170).

11. The modular quantum data processing system (100) according to any one of the previous claims comprising at least one decoder module, said decoder module comprising at least one decoder unit, said decoder unit being configured to receive said outcome and to output at least one correction data to perform fault-tolerant quantum data processing.

12. A fault-tolerant quantum computer comprising at least one modular quantum data processing system (100) according to any one of the previous claims.

13. A method (200) for processing at least one quantum data QI1 using at least one modular quantum data processing system (100) according to any one of the claims 1 to 11, said method comprising at least the following steps performed by said at least one modular quantum data processing system:

o A first emission step (210) of at least one entangled photon PH1 by the first quantum data module QDM1 (110), said entangled photon PH1 comprising at least two photonic modes PH1a and PH1b, said entangled photon PH1 being entangled with said first quantum emitter QE1 (111);
o A second emission step (220) of at least one entangled photon PH2 by the second quantum data module QDM2 (120), said entangled photon PH2 comprising at least two photonic modes PH2a and PH2b, said entangled photon PH2 being entangled with said second quantum emitter QE2 (121);
o A first routing step (230) of at least said photon PH1 by the quantum circuit router QCR1 (140) from said first quantum data module QDM1 (110) to the quantum gate module QG1 (130);
o A second routing step (240) of at least said photon PH2 by the quantum circuit router QCR1 (140) from said second quantum module QDM2 (120) to the quantum gate module QG1 (130);
o An optical transformation step (250), by at least said quantum gate module QG1 (130), on said four photonic modes PH1a, PH1b, PH2a and PH2b, said optical transformation step comprising the following steps:

• a detection step (251) of at least one detection pattern using said four photon detectors PD1, PD2, PD3, and PD4,
• a generation step (252) of at least one outcome based on said detection pattern, and
• a sending step (253) of at least one classical data related to said outcome to at least said classical channel module.

said outcome being taken among at least:

• a first outcome corresponding to an entangling gate between the first quantum emitter QE1 (111) and the second quantum emitter QE2 (121);
• a second outcome corresponding to a unitary gate between the first quantum emitter QE1 (111) and the second quantum emitter QE2 (121);
• a third outcome corresponding to a detection of less than two photons.

said optical transformation step being configured to be repeated on photonic modes of at least two other entangled photons PH11 and PH22, said entangled photon PH11 being emitted by said first quantum emitter QE1 (111) and said entangled photon PH22 being emitted by said second quantum emitter QE2 (121), until said outcome is equal to said first outcome, preferably until said outcome is equal to said first outcome or to said third outcome.

**14.** The method (200) according to the previous claim comprising:

o An emission step by said first quantum emitter QE1 (111) of said another entangled photon PH11 if said outcome is equal to said second outcome,
o An emission step by said second quantum emitter QE2 (121) of said another entangled photon PH22 if said outcome is equal to said second outcome.

**15.** The method (200) according to claim 13 wherein:

o said first emission step comprises the emission of at least a first set of photons comprising at least said photon PH1 and said photon PH11, the photons of said first set being sequentially emitted by said first quantum emitter QE1 (111);
o said second emission step comprises the emission of at least a second set of photons comprising at least said photon PH2 and said photon PH22, the photons of said second set being sequentially emitted by said second quantum emitter QE2 (121);

and the method comprising at least:

o a sending step of one photon of said first set of photons to said quantum gate module QG1 (130) each time said outcome is equal to said second outcome,
o a sending step of one photon of said second set of photons to said quantum gate module QG1 (130) each time said outcome is equal to said second outcome,
o a sending step of at least one photon of said first set of photons to at least a detector module (180) if said outcome is equal to said first outcome, preferably if said outcome is equal to said first outcome or to said third outcome, said detector module (180) being configured to indirectly measure at least one quantum state of said first quantum data module QDM1 (110), preferably of said first quantum emitter QE1 (111), advantageously of said first qubit QU1.

[Figure 1]

EP 4 498 294 A1

Figure 1

Figure 2

[Figure 2]

[Figure 3]

Figure 3

[Figure 4]

Figure 4

[Figure 5]

Figure 5

[Figure 6]

Figure 6

[Figure 7]

Figure 7

[Figure 8]

```
┌─────────────────────────────┐
│             210             │
└─────────────────────────────┘
              │
              ▼
┌─────────────────────────────┐
│             220             │
└─────────────────────────────┘
              │
              ▼
┌─────────────────────────────┐
│             230             │
└─────────────────────────────┘
              │
              ▼
┌─────────────────────────────┐
│             240             │
└─────────────────────────────┘
              │
              ▼
┌─────────────────────────────┐
│             250             │
└─────────────────────────────┘
              │
              ▼
┌─────────────────────────────┐
│             251             │
└─────────────────────────────┘
              │
              ▼
┌─────────────────────────────┐
│             252             │
└─────────────────────────────┘
              │
              ▼
┌─────────────────────────────┐
│             253             │
└─────────────────────────────┘
```

200

Figure 8

Europäisches
Patentamt

European
Patent Office

Office européen
des brevets

# EUROPEAN SEARCH REPORT

Application Number

EP 23 31 5295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARK DONG ET AL: "Programmable photonic integrated meshes for modular generation of optical entanglement links", ARXIV.ORG, CORNELL UNIVERSITY LIBRARY, 201 OLIN LIBRARY CORNELL UNIVERSITY ITHACA, NY 14853, 29 August 2022 (2022-08-29), XP091305041, * abstract * * Chapter "Introduction" – "Programmable photonic integrated circuit hardware"; page 2 – page 4; figures 1, 2 * * Chapter "Discussion"; page 7 * * page 17, last paragraph * | 1-15 | INV. G06N10/20 G06N10/40 G06N10/70 |
| X | THOMAS J BELL ET AL: "Protocol for generation of high-dimensional entanglement from an array of non-interacting photon emitters", ARXIV.ORG, CORNELL UNIVERSITY LIBRARY, 201 OLIN LIBRARY CORNELL UNIVERSITY ITHACA, NY 14853, 4 January 2022 (2022-01-04), XP091130933, DOI: 10.1088/1367-2630/AC475D * abstract * * page 1, paragraph first paragraph – page 2, paragraph; figure 1 * * page 8, paragraph 2nd paragraph * | 1,3-15 | TECHNICAL FIELDS SEARCHED (IPC) G06N |

-/--

The present search report has been drawn up for all claims

| Place of search | Date of completion of the search | Examiner |
|---|---|---|
| The Hague | 18 January 2024 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

| | Europäisches Patentamt European Patent Office Office européen des brevets | **EUROPEAN SEARCH REPORT** | Application Number EP 23 31 5295 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAUL HILAIRE ET AL: "Near-deterministic hybrid generation of arbitrary photonic graph states using a single quantum emitter and linear optics", ARXIV.ORG, CORNELL UNIVERSITY LIBRARY, 201 OLIN LIBRARY CORNELL UNIVERSITY ITHACA, NY 14853, 24 April 2023 (2023-04-24), XP091491118, * abstract * * page 1, paragraph 1 - page 2, column 2, paragraph 2 * * Chapter "1 Redundantly-encoded linear cluster state generation"; page 2 - page 5; figures 1, 2 * * page 5, column 2, paragraph 2 * * page 6, column 2, paragraph 1 * * section "2.2 Boosted fusion gates"; page 7 - page 9; figures 4-6 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 18 January 2024 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUAN LIANG LIM**. Repeat-Until-Success Linear Optics Distributed Quantum Computing. *Phys. Rev. Lett.*, vol. 95, 030505
- **YUAN LIANG LIM et al.** Repeat-until-success quantum computing using stationary and flying qubits. *Phys. Rev. A*, vol. 73, 012304
- **AHARONOV, DORIT ; BEN-OR, MICHAEL**. Fault-tolerant quantum computation with constant error. *Proceedings of the twenty-ninth annual ACM symposium on Theory of computing*, 1997, 176-188
- **N. CODY JONES et al.** Layered Architecture for Quantum Computing. *Phys. Rev. X*, vol. 2, 031007
- **SIMON J DEVITT et al.** Quantum error correction for beginners. *Rep. Prog. Phys.*, 2013, vol. 76, 076001
- **AHARONOVICH, I. et al.** Solid-state single-photon emitters. *Solid-state single-photon emitters. Nature Photon*, 2016, vol. 10, 631-641
- **NETANEL H. LINDNER et al.** Proposal for Pulsed On-Demand Sources of Photonic Cluster State Strings. *Phys. Rev. Lett.*, vol. 103, 113602
- **SIMON J. DEVITT et al.** Quantum Error Correction for Beginners. *arXiv:0905.2794*
- **PAUL HILAIRE et al.** *Quantum*, 2023, vol. 7, 992
- **RYSZARD HORODECKI et al.** Quantum entanglement. *Rev. Mod. Phys.*, vol. 81, 865